# EUROPEAN PATENT SPECIFICATION

(11) **EP 3 436 264 B1**
(45) Date of publication and mention of the grant of the patent: **29.04.2026**
(21) Application number: 17717587.4
(22) Date of filing: 28.03.2017
(51) Int. Cl.: B32B 27/08, B32B 27/18, B32B 27/30, B65D 33/00, B65D 71/00, B65D 75/00

(54) **DUST-FREE HEAT-SHRINKABLE PACKAGING ARTICLE**
STAUBFREIER WÄRMESCHRUMPFVERPACKUNGSARTIKEL
ARTICLE D'EMBALLAGE THERMORÉTRACTABLE EXEMPT DE POUSSIÈRE

(30) Priority: 01.04.2016 US 201662316872 P
(43) Date of publication of application: 06.02.2019
(73) Proprietor: Cryovac, LLC, Charlotte, NC 28208 (US)
(72) Inventor: BEDDINGFIELD, Calvin Weston, Simpsonville, SC 29680 (US); DORROH, Daniel Alfred, Greenville, SC 29607 (US); HOFMEISTER, Frank Michael, Simpsonville, SC 29681 (US); SANDERS, William Thomas, Anderson, SC 29621 (US)
(74) Representative: Uexküll & Stolberg
(86) International application number: PCT/US2017/024502
(87) International publication number: WO 2017/172739

(56) References cited:
- US-A- 3 958 391
- US-A1- 2004 115 453
- US-A1- 2006 210 744
- US-B1- 6 291 063
- US-B1- 6 663 905

## Description

### Background

For decades it has been known to provide loose dust, e.g., loose corn starch dust, on the inside and outside surfaces of a seamless heat shrinkable film tubing which is converted to heat shrinkable bags for the packaging of meat. In the manufacturing process, dust is applied to the inside of a thick, annular, seamless film "tape" immediately after it is extruded from an annular die, i.e., before the tape undergoes solid-state orientation to form the heat-shrinkable film tubing. The presence of dust on the inside surface of the tubing facilitates the manufacture of the heat-shrinkable film and subsequent film processing including (a) printing, (b) conversion to packaging articles, (c) processing of the resulting packaging articles on packaging machines, including opening and insertion of the product into the packaging article.

Dust is applied to the outside of the heat-shrinkable film tubing during conversion of the strand of heat-shrinkable film tubing into individualized packaging articles, e.g., bags, for example via sealing and cutting. The presence of the dust on the outside of the heat-shrinkable film tubing facilitates the subsequent handling of the individualized packaging articles during the process of filling the packaging article with a meat product. More particularly, the presence of dust on the outside surface of the individualized packaging articles lowers the film-to-film coefficient of friction, i.e., acts as a slip agent, i.e., lubricant, allowing the individualized packaging articles to readily slide and readily release from each other and from machine surfaces.

For example, when packaging meat products using a stack of bags in a box, the presence of dust on the outside surface of each of the individualized bags allows the top bag to be readily removed from the stack of bags for filling with product. Without dust on the outside of the bags, the top bag may adhere to the next bag (i.e., the bag immediately beneath the top bag) to a degree that the next bag moves off of the stack as the top bag is being removed from the stack and to a loading station. That is, the next bag may move partially or fully off the stack of bags as the top bag is moved to the loading station. This undesirable movement of the next bag could range from just slight movement off of the stack of bags, all the way to moving to the product loading station with the top bag. Without the dust on the outside of the bags, the movement of the top bag to the loading station would likely move the next bag at least out of alignment with the remaining bags of the stack, and part of the distance to the product loading station. Regardless of whether it is carried out manually or via automation, the removal of the top bag from the stack of bags, without substantial disturbance of the position of the next bag, is assisted by the dust on the outside surface of the top bag and the outside surface of the next bag.

Furthermore, in taped shingled bags, after a product is placed inside the downstream bag (i.e., a "first bag") adhering to the tape(s), the presence of dust on the outside surface of all the bags adhered to the tape(s) allows the now product-containing first bag to be pulled off of the tape(s) with little or no disturbance of the next bag upstream (i.e., the "second bag") on the tape(s), thereby facilitating the loading of the next product into the second bag. This facilitation of loading occurs for both manual and automatic product loading. The resulting loaded first bag can then be removed from the tape(s) and further processed either manually or automatically, including transport to a vacuum chamber where the atmosphere is evacuated from the bag while the product remains therein, with the bag then being closed with a heat seal, and with excess bag tubing cut off and discarded or recycled. Machinery and processes for vacuum packaging meat and other products place in heat shrinkable bags is described in U.S. Patent Nos. 3,958,391 (Kujubu); 4,580,393 (Furukawa), and 4,640,081 (Kawaguchi et al.).

After the first bag on the tape(s) is loaded with product and removed from the tape(s) and forwarded for further packaging operations, the second bag is thereafter positioned for product loading, is thereafter opened, and is thereafter loaded with product, with the resulting loaded second bag thereafter being detached from the tape(s) and moved downstream for further packaging operations as with the first bag. The dust facilitates these packaging operations.

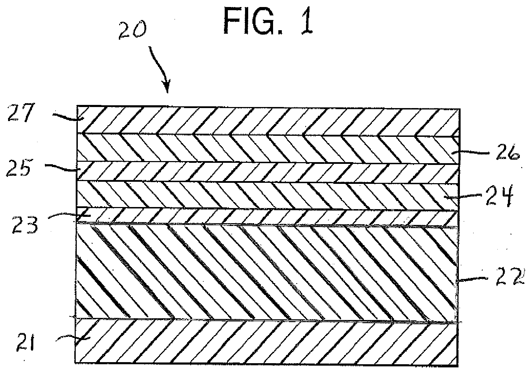

Dust on the inside surface of the tubing assists in the manufacture of the heat shrinkable film tubing. If dust is used to make a tubing in a process as schematically illustrated in FIG 1, the dust is provided to the inside of the annular extrudate through a passageway through the center of the annular die. The dust is applied to the inside of the tubing immediately upon extrusion of the annular extrudate from the annular die. The annular extrudate emerging from the annular die is referred to herein as a "tape." The annular tape is thick and is not yet solid-state oriented and therefore is not yet a heat-shrinkable film. The dust contacts the inside surface of the annular tape shortly after it emerges from the die. The annular tape is quenched by cooling liquid. Once quenched, the annular tape is collapsed into its lay-flat configuration. The annular tape in lay-flat configuration may thereby undergo additional optional processing while in tape form, e.g., irradiation, extrusion coating, etc. However, in the making of the heat-shrinkable film, the annular tape in lay-flat configuration is thereafter reheated to its softening temperature (e.g., via passage through a hot water bath at 85-90°C), with the resulting softened annular tape thereafter passing through a first pair of nip rollers rotating at a surface speed of X meters per minute, following which the annular film is stretched both transversely by passage around a trapped bubble of air, and longitudinally by a second set of nip rollers rotated at a higher surface speed, e.g., X + Y meters per minute. The trapped air is present in an amount which forces the softened annular tape to open and expand transversely enough to cause a desired level of solid state transverse orientation. The relative surface speeds of the nip rollers, combined with the increased machine direction path length from the expansion around the trapped air bubble, produce a desired level of solid-state machine direction orientation. The opening of the softened tape is facilitated by the presence of the dust inside the softened tubing, as without the dust the tape may "block," i.e., present substantial resistance to opening to allow the plug of air to expand the tape in the transverse direction. If the tape blocks, the solid state orientation process fails. Thus, the first reason for providing dust inside the tape is to allow for the opening of the softened tape at the start of the solid state orientation process.

After solid-state orientation, the resulting seamless, annular heat-shrinkable film tubing is collapsed into lay-flat configuration and wound up on a roll. This annular, heat-shrinkable film tubing in lay-flat configuration can thereafter be unrolled and converted, via cutting and sealing, into a plurality of bags or casings, i.e., into a plurality of packaging articles. During conversion of the heat-shrinkable film tubing into packaging articles (bags and casings), dust is added to the outside surface of the tubing, as described above. However, dust added to the inside the annular extrudate provides both enough dust to ensure that the softened tubing readily opens at the beginning of the solid-state orientation process, as well as enough dust to ensure that upon unwinding the wound-up lay-flat seamless heat-shrinkable film tubing followed by cutting and sealing operations to convert the film tubing to heat-shrinkable packaging articles, the resulting packaging articles readily open for subsequent operations for product insertion thereinto. It should be noted that the solid state orientation of the softened tape to form the heat shrinkable film tubing increases the surface area of the inside surface of the tubing by the amount of the total film orientation. For example, a tape subjected to a 3X transverse solid state orientation in combination with a 3X machine direction solid state orientation results in an interior surface area of the tubing which is nine times the interior surface area of the tape. The amount of dust fed inside the tape immediately after extrusion must be adequate to do more than merely allow the opening of the softened annular tape. That is, the amount of dust added must be adequate to prevent the blocking of the inside surface of the heat shrinkable film tubing to itself, so that the tubing can be opened for product insertion after the tubing is converted into a packaging product.

Although corn starch dust, and/or dust made from any other suitable material, provides the above-described slip and antiblock properties needed for the manufacture and use of the heat-shrinkable bags, during application of the dust to the outside of the tubing, dust escapes into the factory because the dust loses its adhesion to the outside surface of the tubing, as well as escapes from inside the tubing during conversion to packaging articles. The dust which escapes into the factory passes into whatever ambient environment the tubing or packaging article is in. The result is dust in the air and on the surfaces of air filters, equipment, building surfaces, etc. Moreover, as corn starch dust is nutritional, microbes can be sustained and multiply when provided with the dust as a food source. Dust also detracts from the aesthetic appearance of packaging articles before a meat product is placed inside the packaging article and the dust rinsed off the outside of the packaging article. Thus, it would be desirable to provide the tubing and packaging articles with the desired slip and antiblock properties without the use of dust. US 6,663,905 B1 describes end-seal and side-seal patch bags comprising a heat-shrinkable film. US 2004/115453 A1 is aimed at providing a polymeric multilayer film, such as a heat-shrinkable film having good slip properties, while eliminating significant wax build-up on film-making components. US 3,958,371 A discloses a method of vacuum packaging a commodity, particularly a livestock meat for food, as well as a corresponding apparatus for vacuum packaging. US 6,291,063 B1 describes a multilayer film comprising an outer layer, wherein the outer layer comprises polyolefin and a certain amount of antiblocking agent having a certain particle size. US 2006/210744 A describes a retortable multilayer packaging film comprising a crosslinked heat seal layer and a crosslinked greaseresistant layer, with the heat seal layer being an outer layer of the film.

Heat shrinkable film tubings which are dust-free but which have desirable slip and antiblock properties are known in the prior art. These prior art heat shrinkable film tubings have been used as packaging films, but have not been converted to heat-shrinkable bags and casings (comprising or made from seamless tubing) for the packaging of meat products. Rather, relative to heat-shrinkable bags and casings used for the packaging of meat and other products, these prior art heat-shrinkable films are manufactured as seamless tubings in order to provide the heat-shrinkable character, but the heat shrinkable film tubings are cut in the machine direction to open up the tubing to result in a flat film product which is wound up as a flat film and thereafter unwound and used as a flat film in various packaging applications. Moreover, these flat films have a total film thickness (before shrinking) of less than 40.64 µm (1.6 mils). These prior art flat films have been used for the packaging of food and non-food items, and typically exhibit a free shrink at 85°C of from 5 to 15% in the longitudinal direction (i.e., machine direction) and from 5 to 20% in transverse direction.

Moreover, as these prior art dust-free, heat-shrinkable flat films are not converted into packaging articles in the form of tubings in which the tubing is placed in lay-flat configuration with the lay-flat tubing having to be opened in order to be filled with product, these heat-shrinkable flat films are not subject to the same release requirements as are present in the manufacture and use of the heat-shrinkable bags described above. Rather, the only release requirements are in the unrolling of the flat film from a roll, which is different from and much less sensitive to blocking than the release requirements in the opening of a packaging article made from a tubing in lay-flat configuration, particularly a tubing in lay-flat configuration which has been on a roll and/or which has been passed through nip rollers in lay-flat configuration during film processing.

### Summary of the Invention

Heat-shrinkable packaging articles used for meat packaging have relatively thick heat seal layers comprising a polymeric composition of relatively low density. It has been discovered that the combination of slip and antiblock components used in prior art dustless heat-shrinkable films are inadequate to provide the antiblocking characteristics needed to provide openability to heat-shrinkable packaging articles for the packaging of meat, i.e., heat-shrinkable packaging articles comprising a multilayer, heat-shrinkable, film tubing in lay-flat configuration, the film tubing having an inside heat seal layer heat sealed to itself. This discovery confirms why commercially-available heat-shrinkable bags for packaging meat have dust on the inside and outside surfaces. The combination of slip and antiblock components used in the prior art dustless heat-shrinkable films does not need to meet the openability performance of packaging articles comprising a multilayer, heat-shrinkable, film tubing in lay-flat configuration in which a first lay-flat side is in contact with a second lay-flat side, because the prior art dustless heat-shrinkable films have not been used to make such packaging articles. Attempts to use the prior art dustless heat-shrinkable films to make packaging articles comprising the multilayer, heat-shrinkable, film tubing in lay-flat configuration have resulted in failure, as the packaging article blocked (i.e., would not open) under standard openability conditions.

In addition, the elimination of the use of corn starch dust, tapioca dust, etc. (i) reduces microbial growth by elimination of a food source (ii) provides a cleaner production area and improved working environment (iii) reduces contamination of equipment and sensors (iv) reduces the need for air filters (v) reduces wear on equipment, and (vi) lengthens the working life of heat sealing equipment (vii) reduces or eliminates air in rolls (viii) reduces or eliminates film creasing and feathered edges (ix) improves the consistency of the loading and handling of heat shrinkable film tubing and packaging articles made therefrom.

A first aspect of the invention is directed to a packaging article comprising a heat-shrinkable film tubing in lay-flat configuration. The heat-shrinkable film tubing has a first lay-flat side in contact with a second lay-flat side. The heat-shrinkable film tubing comprises a multilayer heat-shrinkable film comprising (A) an inside heat seal layer comprising a seal layer polymeric composition, and (B) an outside layer comprising an outside layer polymeric composition, wherein the outside layer polymeric composition comprises at least one member selected from the group consisting of polyolefin, ethylene/alpha-olefin copolymer, ethylene/unsaturated ester copolymer, ionomer resin, propylene/ethylene copolymer, polystyrene, polyamide, polyester, and polycarbonate, and wherein the inside layer has an inside surface and the outside layer has an outside surface, wherein at least one of the inside surface of the inside layer or the outside surface of the outside layer is free of dust thereon. The inside heat seal layer is heat sealed to itself. A first portion of the inside heat seal layer is on the first lay-flat side of the packaging article and a second portion of the inside heat seal layer is on the second lay-flat side of the packaging article, with the first portion of the heat seal layer being in contact with the second portion of the heat seal layer. The heat seal layer comprises a seal layer polymeric composition comprising polyolefin having an average density of less than 0.92 g/cm³. The inside heat seal layer has a thickness of at least 2.54 µm (0.1 mil). The inside heat seal layer further comprises: (a)(i) antiblock particulates in an amount of at least 2000 ppm, based on total layer weight, the antiblock particulates having a mean particle size of at least 3 microns, and wherein the antiblock particulates are made from natural silica, synthetic silica, silicate, diatomaceous earth, fumed synthetic silica, precipitated synthetic silica, gelled synthetic silica, sodium calcium silicate, and sodium calcium aluminum silicate, talc, kaolin, clay, mica, silicate, aluminum silicate, silicon dioxide, magnesium silicate, calcium silicate, calcium carbonate, and magnesium oxide; (a)(ii) a fast-blooming release agent in the inside seal layer in an amount of at least 1200 ppm, based on total layer weight, the fast-blooming release agent comprising at least one member selected from the group consisting of erucamide, oleamide, lauramide, lauric diethanolamide, monoglyceride, diglyceride, glycerol monoleate, glycerol monostearate, and (a)(iii) a slow-blooming release agent in the inside seal layer in an amount of at least 1200 ppm, based on total layer weight, the slow-blooming release agent comprising at least one member selected from the group consisting of stearamide, bis-stearamide, ethylene bis-stearamide, stearyl stearamide, stearyl erucamide, erucyl erucamide, behanamide, ethylene bis-oleamide, oleyl palmitamide, stearate ester, sorbitan stearate, mono stearate, di stearate, tri stearate, sorbitan monolaurate, pentaerythritol stearate ester, polyglycerol stearate, zinc stearate, calcium stearate, magnesium stearate, sodium stearate, potassium stearate. The packaging article has an open end. The antiblock particulates, the fast-blooming release agent, and the slow-blooming release agent are present in the inside heat seal layer of the multilayer heat-shrinkable film in an amount so that the packaging article opens in a Standard Opening Test in which a strand of the multilayer heat-shrinkable film tubing has been stored in lay-flat configuration while wrapped around a core having a diameter of 8.9 cm for 7 days, with the strand of the multilayer heat-shrinkable film tubing being wound onto the core to a roll diameter of 50 cm, with the film being wound at a tension of 179 gm/cm of lay-flat tubing width, at a conclusion of which a portion of the tubing 2.54 cm from the core is converted into a packaging article while the tubing remains in lay-flat configuration. The resulting packaging article is provided with an open top having an open top edge transverse to a length of the tubing, with a lower lay-flat outside surface of the packaging article being in lay-flat contact with an upper horizontal surface of a support platform having a linear leading edge wider than a width of the packaging article and a length longer than the packaging article. The lower lay-flat outside surface of the packaging article is in adhered contact with the upper horizontal surface of the support platform by a pair of tapes each having a width of 6 mm and an adhesion to steel of at least 90 g/6mm measured in accordance with AFERA 4001-ED.9/79, with each of the tapes running 3.81 cm (1.5 inches) from the linear leading edge of the packaging article in a direction perpendicular to the open top edge of the article. The tapes are located on the upper horizontal surface of the support platform such that each tape has a centerline placed at a position corresponding with 33.3% of a distance across the lay flat width of the tubing. The open top lip of the packaging article is parallel to and directly above the leading edge of the support platform. The packaging article opening up upon being simultaneously subjected to: (i) a 0.5 second burst of air delivered from a de Laval air nozzle having an air consumption of 28.9 Nm³/h (=17 scfm), the air nozzle being positioned along a center line inclined 15 degrees from the support platform, the air nozzle having a tip positioned 7.62 cm (3 inches) from the lip of the packaging article, with the air nozzle being aimed at the open top lip of the packaging article, and (ii) a 2 second flow of air from an air knife positioned parallel to and coincident with the support platform, the air knife having a discharge line 13.97 cm (5.5 inches) from the lip of the packaging article, the air knife having an air consumption of 76.5 Nm³/h (=45 scfm).

Another aspect of the invention is directed to an assembly comprising a set of imbricated packaging articles on two strands of tape. Each of the strands of tape has a tacky surface and an opposite surface free of tack. Each of the packaging articles is in accordance with the first aspect above. Each of the packaging articles has two overlying sides of substantially identical dimensions. Each of the packaging articles has one side secured to the tacky surface of both of said tapes. The open end of each of the packaging articles is in the same direction respecting the tapes as all of the other packaging articles in the set. Each successive packaging article adhered to the tapes is offset from the other packaging articles of the set and overlying the opening of an underlying packaging article. The tapes are spaced apart and parallel to one another.

Another is directed to a process for packaging a plurality of individual meat products. The process comprises (A) placing each of the plurality of individual meat products into each of a corresponding plurality of individual packaging articles having an open top, each of the corresponding individual packaging articles being dust free and being in accordance with the first aspect as set forth above, 1, to produce a plurality of partially packaged products including a first partially packaged product and a second partially packaged product, (B) moving a first platen into a loading zone, the first platen being in a state of continuous motion; (C) placing the first partially packaged product onto a first platen while the first platen is moving through the loading zone; (D)(d)(i) moving the first platen out of the loading zone while the first partially- packaged product remains on the first platen; and (D)(d)(ii) bringing a first vacuum chamber lid down over and into contact with the first platen to form a first vacuum chamber having the first partially packaged product therein while the first platen remains in continuous motion; (D)(d)(iii) evacuating the atmosphere from within the first vacuum chamber, including evacuating the atmosphere from within the first partially packaged product, as the first vacuum chamber continues to travel; (D) (d)(iv) sealing closed the individual packaging article of the first partially packaged product while the atmosphere remains evacuated from the first vacuum chamber to produce a first vacuum packaged product, as the first vacuum chamber continues to travel; (D)(d)(v) allowing atmosphere to re-enter the first vacuum chamber as the first platen, having the first vacuum packaged product thereon, continues to travel; (D)(d)(vi) separating the first vacuum chamber lid from the first platen, as the first platen continues to travel, and (D) (d)(vii) removing the first vacuum packaged product from the first platen, as the first platen continues to travel; (E) placing the second partially packaged product onto a second platen after the first platen has moved out of the loading zone and the second platen has moved into the loading zone; and (F)(f)(1) moving the second platen out of the loading zone while the second partially- packaged product remains on the second platen; (F) (f)(ii) bringing a second vacuum chamber lid down over and into contact with the second platen to form a second vacuum chamber having the second partially packaged product therein while the second platen remains in continuous motion; (F) (f) (iii) evacuating the atmosphere from within the second vacuum chamber, including evacuating the atmosphere from within the second partially packaged product, as the second vacuum chamber continues to travel; (F) (f) (iv) sealing closed the individual packaging article of the second partially packaged product while the atmosphere remains evacuated from the second vacuum chamber to produce a second vacuum packaged product, as the second vacuum chamber continues to travel; (F) (f) (v) allowing atmosphere to re-enter the second vacuum chamber as the second platen, having the second vacuum packaged product thereon, continues to travel; (F) (f) (vi) separating the second vacuum chamber lid from the second platen, as the second platen continues to travel, and (F) (f) (vii) removing the second vacuum packaged product from the second platen, as the second platen continues to travel.

### Brief Description of the Drawings

FIG 1 is a schematic of a cross-sectional view of a heat shrinkable multilayer film.
FIG 2 is a schematic of a process for producing a heat-shrinkable multilayer film tubing useful in making the packaging article, such as the film of FIG 1.
FIG 3 is a schematic of a heat-shrinkable end-seal bag made from the film tubing of FIG 1.
FIG 4 is a cross-sectional view of the bag of FIG 3, taken through section 4-4 thereof.
FIG 5 is a schematic of a heat-shrinkable side-seal bag also made from the film tubing of FIG 1.
FIG 6 is a cross-sectional view of the side-seal bag of FIG 5, taken through section 6-6 thereof.
FIG 7 is a schematic of a heat-shrinkable pouch, which also can be made from the film tubing of FIG 1.
FIG 8 is a transverse cross-sectional view of the heat-shrinkable pouch of FIG 7, taken through section 8-8 thereof.
FIG 9 is a longitudinal cross-sectional view of the heat-shrinkable pouch of FIG 7, taken through section 9-9 thereof.
FIG 10 is a schematic of a heat-shrinkable end-seal patch bag.
FIG 11 is a cross-sectional view of the patch bag of FIG 10, taken through section 11-11 thereof.
FIG 12 is a schematic of a heat-shrinkable side-seal patch bag.
FIG 13 is a cross-sectional view of the side-seal patch bag of FIG 12, taken through section 13-13 thereof.
FIG 14 illustrates a perspective view of a schematic of a "standard bag openability test apparatus."
FIG 15 illustrates a top view of the schematic of the standard bag openability test apparatus of FIG 14.
FIG 16 illustrates a side view of the schematic of the standard bag openability test apparatus of FIG 14.
FIG 17 illustrates an end-view of the schematic of the standard bag openability test apparatus of FIG 14.
FIG 18 illustrates a perspective view of the schematic of the standard bag openability test apparatus with an end-seal bag in lay-flat configuration thereon, i.e., ready for the openability test to be conducted.
FIG. 19 illustrates a top view of the schematic of the standard bag openability test apparatus with an end-seal bag in lay-flat configuration thereon, i.e., ready for the openability test to be conducted.
FIG. 20 illustrates a side view of the schematic of the standard bag openability test apparatus with an end-seal bag in lay-flat configuration thereon, i.e., ready for the openability test to be conducted.
FIG. 21 illustrates an end view of the schematic of the standard bag openability test apparatus with an end-seal bag in lay-flat configuration thereon, i.e., ready for the openability test to be conducted.
FIG. 22 illustrates a perspective view of the openability apparatus and bag of FIG 18 two seconds after openability testing is initiated, with the bag passing the openability test.
FIG. 23 illustrates a top view of the openability apparatus and bag of FIG 22.
FIG 24 illustrates a side view of the openability apparatus and bag FIG 22.
FIG 25 illustrates an end view of the openability apparatus and bag FIG 19.
FIG. 26 illustrates a perspective view of the openability apparatus and bag of FIG 18 two seconds after openability testing is initiated, with the bag failing the openability test.
FIG. 27 illustrates a top view of the openability apparatus and bag FIG 26.
FIG 28 illustrates a side view of the openability apparatus and bag FIG 26.
FIG 29 illustrates an end view of the openability apparatus and bag FIG 26.
FIG 30 is a perspective view of an air nozzle to be used on the packaging article openability apparatus.
FIG 31 is a perspective view of an air knife to be used on the packaging article openability apparatus.

### Detailed Description

As used herein, the term "film" is used in a generic sense to include plastic web, regardless of whether it is film or sheet.

As used herein, the term "package" refers to a product packaged in a packaging material, such as a film.

As used herein, the term "packaging article" refers to an article of manufacture which is suitable for use in the packaging of a product to be placed inside the packaging article. Bags and casings are examples of packaging articles which can be used for the packaging of meat products. The bag can be an end-seal bag, side-seal bag, L-seal bag, or pouch. The casing can be a seamless casing, or a backseamed casing. Backseamed casings include fin-seal casing, lap-seal casing, and butt-seal casing with backseaming tape.

As used herein, the phrases "seal layer", "sealing layer", "heat seal layer", and "sealant layer", refer to an outer film layer, or layers, involved in the sealing of the film to itself, another film layer of the same or another film, and/or another article which is not a film. It should also be recognized that in general, up to the outer 76.2 µm (3 mils) of a film can be involved in the sealing of the film to itself or another layer. With respect to packages having only fin-type seals, as opposed to lap-type seals, the phrase "sealant layer" generally refers to the inside film layer of a package, as well as supporting layers within 76.2 µm (3 mils) of the inside surface of the sealant layer, the inside layer frequently also serving as a food contact layer in the packaging of foods.

As used herein, the term "seal" refers to any seal of a first region of a film surface to a second region of a film surface, wherein the seal is formed by heating the regions to at least their respective seal initiation temperatures. The heating can be performed by any one or more of a wide variety of manners, such as using a hot wire, hot knife, heated bar, hot air, infrared radiation, ultrasonic sealing, etc. More preferably, the seal is formed by hot wire and/or hot knife. As is known to those of skill in the art, a static lap seal is another seal useful in forming a package from the film of the present invention.

As used herein, the phrase "a layer comprising a polymeric composition having a density of less than X g/cm³" means that taking together all of the polymer(s) in the layer but not including the non-polymeric components in the layer, the density of the polymer(s) in the layer is averaged on a weight percent basis, with the resulting averaged value being less than 0.92 g/cm³. The same analysis applies for a density range. If different polymers are blended to make the polymeric composition from which the heat seal layer is made, the density of the polymeric composition is the density of the blend of polymers in the proportions in which they are blended. Solid materials such as antiblocking compounds are not included in determining the density of the first polymeric composition. For example, the density of the inside layer polymeric composition is weighted average of the densities of each of the polymer(s) present in the inside layer.

As used herein, the phrase "...the film layer comprising...," refers to film layer which has the recited components throughout the cross-section of the layer, as well as on both outer principal surfaces of the layer.

As used herein, the term "tubing" refers to a seamless film tubing or a backseamed tubing in the form of a lap sealed tubing, a fin sealed tubing, or a butt sealed tubing having a backseaming tape. As used herein, with respect to film tubing and packaging articles made therefrom, the phrase "in lay-flat configuration" refers to a tubing or packaging article comprising a tubing that is in a flattened state with a first lay-flat side and a second lay flat side which are connected to one another along side edges which can be creased edges or sealed edges.

As used herein, the term "oriented," when used relative to heat-shrinkable films and tubings, refers to a polymer-containing material which has been stretched while in the solid state, but at an elevated temperature (the orientation temperature), followed by being "set" in the stretched configuration by cooling the material while substantially retaining the stretched dimensions. Upon subsequently heating unrestrained, unannealed, oriented polymer-containing material to its softening point (i.e., the temperature at which solid state orientation was carried out), heat shrinkage is produced. More particularly, the term "oriented", as used herein, refers to oriented films, wherein the solid state orientation can be produced in one or more of a variety of manners, including trapped bubble method and the tenter frame method.

As used herein, the phrase "orientation ratio" refers to the multiplication product of the extent to which the plastic film material is expanded in several directions, usually two directions perpendicular to one another. Expansion in the machine direction is herein referred to as "drawing", whereas expansion in the transverse direction is herein referred to as "stretching". For film tubings extruded through an annular die to form a seamless unoriented tubing, called a "tape," stretching is obtained by heating the tape to its softening temperature followed by passing the tape over a trapped bubble of air to thereby "blow" the tape to produce transverse orientation in the making of the heat-shrinkable film. For such films, drawing is obtained by passing the film through two sets of powered nip rolls, with the downstream set having a higher surface speed than the upstream set, with the resulting draw ratio being the surface speed of the downstream set of nip rolls divided by the surface speed of the upstream set of nip rolls. The degree of orientation is also referred to as the orientation ratio, or sometimes as the "racking ratio," which is the orientation in the machine direction (MD) multiplied by the orientation in the transverse direction (TD).

As used herein, the term "polymer" refers to the product of a polymerization reaction, and is inclusive of homopolymers, copolymers, terpolymers, etc. In general, the layers of a film can consist essentially of a single polymer, or can have still additional polymers together therewith, i.e., blended therewith.

As used herein, the term "copolymer" refers to polymers formed by the polymerization reaction of at least two different monomers. For example, the term "copolymer" includes the copolymerization reaction product of ethylene and an alpha-olefin, such as 1-hexene. However, the term "copolymer" is also inclusive of, for example, the copolymerization of a mixture of ethylene, propylene, 1-hexene, and 1-octene.

As used herein, a copolymer identified in terms of a plurality of monomers, e.g., "propylene/ethylene copolymer", refers to a copolymer in which either monomer may copolymerize in a higher weight or molar percent than the other monomer or monomers. However, the first listed monomer preferably polymerizes in a higher weight percent than the second listed monomer, and, for copolymers which are terpolymers, quadripolymers, etc., preferably the first monomer copolymerizes in a higher weight percent than the second monomer, and preferably the second monomer copolymerizes in a higher weight percent than the third monomer, etc.

As used herein, copolymers are identified, i.e., named, in terms of the monomers from which the copolymers are produced. For example, the phrase "propylene/ethylene copolymer" refers to a copolymer produced by the copolymerization of both propylene and ethylene, with or without additional comonomer(s).

As used herein, terminology employing a "/" with respect to the chemical identity of a copolymer (e.g., "an ethylene/alpha-olefin copolymer"), identifies the comonomers which are copolymerized to produce the copolymer. As used herein, "ethylene alpha-olefin copolymer" is the equivalent of "ethylene/alpha-olefin copolymer."

As used herein, the phrase "heterogeneous polymer" refers to polymerization reaction products of relatively wide variation in molecular weight and relatively wide variation in composition distribution, i.e., typical polymers prepared, for example, using conventional Ziegler-Natta catalysts. Heterogeneous polymers are useful in various layers of the film used in the present invention. Although there are a few exceptions (such as TAFMER^{®}) linear homogeneous ethylene/alpha-olefin copolymers produced by Mitsui Petrochemical Corporation, using Ziegler-Natta catalysts), heterogeneous polymers typically contain a relatively wide variety of chain lengths and comonomer percentages.

As used herein, the phrase "homogeneous polymer" refers to polymerization reaction products of relatively narrow molecular weight distribution and relatively narrow composition distribution. Homogeneous polymers are useful in various layers of the multilayer film used in the present invention. Homogeneous polymers are structurally different from heterogeneous polymers, in that homogeneous polymers exhibit a relatively even sequencing of comonomers within a chain, a mirroring of sequence distribution in all chains, and a similarity of length of all chains, i.e., a narrower molecular weight distribution. Furthermore, homogeneous polymers are typically prepared using metallocene, or other single-site type catalysis, rather than using Ziegler Natta catalysts.

More particularly, homogeneous ethylene/alpha-olefin copolymers may be characterized by one or more methods known to those of skill in the art, such as molecular weight distribution (M_{w}/Mₙ), composition distribution breadth index (CDBI), and narrow melting point range and single melt point behavior. The molecular weight distribution (M_{w}/Mₙ), also known as polydispersity, may be determined by gel permeation chromatography. The homogeneous ethylene/alpha-olefin copolymers useful in this invention generally has (M_{w}/Mₙ) of less than 2.7; preferably from about 1.9 to 2.5; more preferably, from about 1.9 to 2.3. The composition distribution breadth index (CDBI) of such homogeneous ethylene/alpha-olefin copolymers will generally be greater than about 70 percent. The CDBI is defined as the weight percent of the copolymer molecules having a comonomer content within 50 percent (i.e., plus or minus 50%) of the median total molar comonomer content. The CDBI of linear polyethylene, which does not contain a comonomer, is defined to be 100%. The Composition Distribution Breadth Index (CDBI) is determined via the technique of Temperature Rising Elution Fractionation (TREF). CDBI determination clearly distinguishes the homogeneous copolymers used in the present invention (narrow composition distribution as assessed by CDBI values generally above 70%) from heterogeneous polymers such as VLDPE's which are available commercially which generally have a broad composition distribution as assessed by CDBI values generally less than 55%. The CDBI of a copolymer is readily calculated from data obtained from techniques known in the art, such as, for example, TREF as described, for example, in Wild et. al., J. Poly. Sci. Poly. Phys. Ed., Vol. 20, p.441 (1982). Preferably, the homogeneous ethylene/alpha-olefin copolymers have a CDBI greater than about 70%, i.e., a CDBI of from about 70% to 99%. Such homogeneous polymers exhibit a relatively narrow melting point range, in comparison with "heterogeneous copolymers", i.e., polymers having a CDBI of less than 55%. Preferably, the homogeneous ethylene/alpha-olefin copolymers exhibit an essentially singular melting point characteristic, with a peak melting point (Tₘ), as determined by Differential Scanning Colorimetry (DSC), of from about 60°C to 105°C. Preferably the homogeneous copolymer has a DSC peak Tₘ of from about 80°C to 100°C. As used herein, the phrase "essentially single melting point" means that at least about 80%, by weight, of the material corresponds to a single Tₘ peak at a temperature within the range of from about 60°C to 105°C, and essentially no substantial fraction of the material has a peak melting point in excess of about 115°C., as determined by DSC analysis. DSC measurements are made on a Perkin Elmer System 7 Thermal Analysis System. Melting information reported are second melting data, i.e., the sample is heated at a programmed rate of 10°C./min. to a temperature below its critical range. The sample is then reheated (2nd melting) at a programmed rate of 10°C/min. The presence of higher melting peaks is detrimental to film properties such as haze, and compromises the chances for meaningful reduction in the seal initiation temperature of the final film.

A homogeneous ethylene/alpha-olefin copolymer can, in general, be prepared by the copolymerization of ethylene and any one or more alpha-olefin. Preferably, the alpha-olefin is a C₃-C₂₀ alpha-monoolefin, more preferably, a C₄-C₁₂ alpha-monoolefin, still more preferably, a C₄-C₈ alpha-monoolefin. Still more preferably, the alpha-olefin comprises at least one member selected from the group consisting of butene-1, hexene-1, and octene-1, i.e., 1-butene, 1-hexene, and 1-octene, respectively. Most preferably, the alpha-olefin comprises octene-1, and/or a blend of hexene-1 and butene-1.

Processes for preparing and using homogeneous polymers are disclosed in U.S. Patent No. 5,206,075, U.S. Patent No. 5,241,031, and PCT International Application WO 93/03093. Further details regarding the production and use of homogeneous ethylene/alpha-olefin copolymers are disclosed in PCT International Publication Number WO 90/03414, and PCT International Publication Number WO 93/03093, both of which designate Exxon Chemical Patents, Inc. as the Applicant,.

Still another genus of homogeneous ethylene/alpha-olefin copolymers is disclosed in U.S. Patent No. 5,272,236, to LAI, et. al., and U.S. Patent No. 5,278,272, to LAI, et. al..

As used herein, the term "polyolefin" refers to any polymerized olefin, which can be linear, branched, cyclic, aliphatic, aromatic, substituted, or unsubstituted. More specifically, included in the term polyolefin are homopolymers of olefin, copolymers of olefin, copolymers of an olefin and a non-olefinic comonomer copolymerizable with the olefin, such as vinyl monomers, modified polymers thereof, and the like. Specific examples include polyethylene homopolymer, polypropylene homopolymer, polybutene, ethylene/alpha-olefin copolymer, propylene/alpha-olefin copolymer, butene/alpha-olefin copolymer, ethylene/vinyl acetate copolymer, ethylene/ethyl acrylate copolymer, ethylene/butyl acrylate copolymer, ethylene/methyl acrylate copolymer, ethylene/acrylic acid copolymer, ethylene/methacrylic acid copolymer, modified polyolefin resin, ionomer resin, polymethylpentene, etc. Modified polyolefin resin is inclusive of modified polymer prepared by copolymerizing the homopolymer of the olefin or copolymer thereof with an unsaturated carboxylic acid, e.g., maleic acid, fumaric acid or the like, or a derivative thereof such as the anhydride, ester or metal salt or the like. It could also be obtained by incorporating into the olefin homopolymer or copolymer, an unsaturated carboxylic acid, e.g., maleic acid, fumaric acid or the like, or a derivative thereof such as the anhydride, ester or metal salt or the like.

As used herein, terms identifying polymers, such as "polyamide", "polyester", "polyurethane", etc. are inclusive of not only polymers comprising repeating units derived from monomers known to polymerize to form a polymer of the named type, but are also inclusive of comonomers, derivatives, etc. which can copolymerize with monomers known to polymerize to produce the named polymer. For example, the term "polyamide" encompasses both polymers comprising repeating units derived from monomers, such as caprolactam, which polymerize to form a polyamide, as well as copolymers derived from the copolymerization of caprolactam with a comonomer which when polymerized alone does not result in the formation of a polyamide. Furthermore, terms identifying polymers are also inclusive of mixtures, blends, etc. of such polymers with other polymers of a different type. More preferably, however, the polyolefin is a the polymerization product of one or more unsubstituted olefins, the polyamide is the polymerization product of one or more unsubstituted amides, etc.

As used herein, the phrase "ethylene alpha-olefin copolymer", and "ethylene/alpha-olefin copolymer", refer to such heterogeneous materials as linear low density polyethylene (LLDPE), and very low and ultra-low density polyethylene (VLDPE and ULDPE); and homogeneous polymers such as metallocene-catalyzed EXACT^{®} linear homogeneous ethylene/alpha olefin copolymer resins obtainable from the Exxon Chemical Company, of Baytown, Texas, and TAFMER^{®} linear homogeneous ethylene/alpha-olefin copolymer resins obtainable from the Mitsui Petrochemical Corporation. All these materials generally include copolymers of ethylene with one or more comonomers selected from C₄ to C₁₀ alpha-olefin such as butene-1 (i.e., 1-butene), hexene-1, octene-1, etc. in which the molecules of the copolymers comprise long chains with relatively few side chain branches or cross-linked structures. This molecular structure is to be contrasted with conventional low or medium density polyethylenes which are more highly branched than their respective counterparts. The heterogeneous ethylene/alpha-olefin commonly known as LLDPE has a density usually in the range of from about 0.91 grams per cubic centimeter to about 0.94 grams per cubic centimeter. Other ethylene/alpha-olefin copolymers, such as the long chain branched homogeneous ethylene/alpha-olefin copolymers available from The Dow Chemical Company, known as AFFINITY^{®} resins, are also included as another type of homogeneous ethylene/ alpha-olefin copolymer useful in the present invention.

In general, the ethylene/alpha-olefin copolymer comprises a copolymer resulting from the copolymerization of from about 80 to 99 weight percent ethylene and from 1 to 20 weight percent alpha-olefin. Preferably, the ethylene/alpha-olefin copolymer comprises a copolymer resulting from the copolymerization of from about 85 to 95 weight percent ethylene and from 5 to 15 weight percent alpha-olefin.

As used herein, the phrases "inner layer" and "internal layer" refer to any layer, of a multilayer film, having both of its principal surfaces directly adhered to another layer of the film.

As used herein, the phrase "outer layer" refers to any film layer of film having less than two of its principal surfaces directly adhered to another layer of the film. The phrase is inclusive of monolayer and multilayer films. In multilayer films, there are two outer layers, each of which has a principal surface adhered to only one other layer of the multilayer film. In monolayer films, there is only one layer, which, of course, is an outer layer in that neither of its two principal surfaces is adhered to another layer of the film.

As used herein, the phrase "inside layer" refers to the outer layer, of a multilayer film packaging a product, which is closest to the product, relative to the other layers of the multilayer film. "Inside layer" also is used with reference to the innermost layer (which is also an outer layer) of a plurality of concentrically arranged layers extruded through one or more annular dies. The inside layer is also frequently referred to as the "seal layer" or as the "heat seal layer."

As used herein, the phrase "outside layer" refers to the outer layer, of a multilayer film packaging a product, which is furthest from the product relative to the other layers of the multilayer film. "Outside layer" also is used with reference to the outermost layer of a plurality of concentrically arranged layers extruded through one or more annular dies.

As used herein, the phrase "machine direction", herein abbreviated "MD", refers to a direction "along the length" of the film, i.e., in the direction of the film as the film is formed during extrusion and/or coating.

As used herein, the phrase "transverse direction", herein abbreviated "TD", refers to a direction across the film, perpendicular to the machine direction.

As used herein, the phrase "free shrink" refers to the percent dimensional change in a 10 cm x 10 cm specimen of film, when shrunk at 85°C (=185°F), with the quantitative determination being carried out according to ASTM D 2732, as set forth in the 1990 Annual Book of ASTM Standards, Vol. 08.02, pp.368-371. Free shrink measurements can be reported for the machine direction ("MD," which is the direction in which the film is extruded), or the transverse direction ("TD", which is perpendicular to the machine direction and directly across the direction in which the film is extruded), or as "total free shrink," which is MD+TD, i.e., summed together.

The heat-shrinkable packaging article is made from a heat-shrinkable tubing. The heat-shrinkable tubing can be a seamless tubing or a backseamed tubing. A backseamed tubing is a tubing in which the film has a lengthwise seal to itself or a tape. If backseamed, the tubing can be formed with a fin seal, or with a lap seal, or the tubing film can be butt sealed to a backseam tape.

The heat-shrinkable tubing can be used to make a heat-shrinkable packaging article, such as a heat-shrinkable bag or a heat-shrinkable casing. Bag types include end-seal, side seal, pouch (i.e., U-seal), and L-seal (made by folding a flat film and providing a bottom seal and one side seal. The bag can have one or more patches adhered thereto. Casings can be seamless or backseamed, the latter including fin sealed, lap sealed, and butt sealed with a backseam tape.

The packaging article can be used for the packaging of a wide variety of products, it is especially useful for the packaging of meat products. Typical meat products include beef, pork, foul, fish, lamb, etc., and include fresh meat products and processed meat products, such as sausage.

If the outside layer of the film from which the bag is made contains only siloxane and/or a particulate antiblock, and does not contain fatty acid amides or waxes, it has been found that the adhesion of the patch film is much stronger than if a migratory slip agent or release agent, such as erucamide, is added to the outside layer of the bag.

The film used to make the packaging article is a heat-shrinkable multilayer film. The heat-shrinkable film can have a total thickness, before shrinking, of from 43.18 to 508 µm (1.7 mils to 20 mils), or from 45.72 to 254 µm (1.8 to 10 mils), or from 48.26 to 127 µm (1.9 to 5 mils), or from 50.8 to 101.6 µm (2 to 4 mils), or from 50.8 to 76.2 µm (2 to 3 mils), or from 50.8 to 63.5 µm (2 to 2.5 mils).

The film can have a total free shrink at 85°C of at least 50% (measured in accordance with ASTM D 2732). The film can have a total free shrink at 85°C of from 50% to 120%, or from 55% to 115%, or from 60% to 110%, or from 65% to 105%, or from 70% to 100%, or from 75% to 100%, or from 80% to 100%, or from 85% to 100%.

In an embodiment, the film tubing is made from a film of the following layer arrangement:
(inside) Seal / 1^{st} Bulk / 1^{st} Tie / O₂-Barrier / 2^{nd} Tie / 2^{nd} Bulk / Abuse (outside)
In another embodiment, the film tubing is made from a multilayer film of the following layer arrangement:
(inside) Seal / 1^{st} Bulk / 2^{nd} Bulk / 1^{st} Tie / O₂-Barrier / 2^{nd} Tie / 2^{nd} Bulk / Abuse (outside)

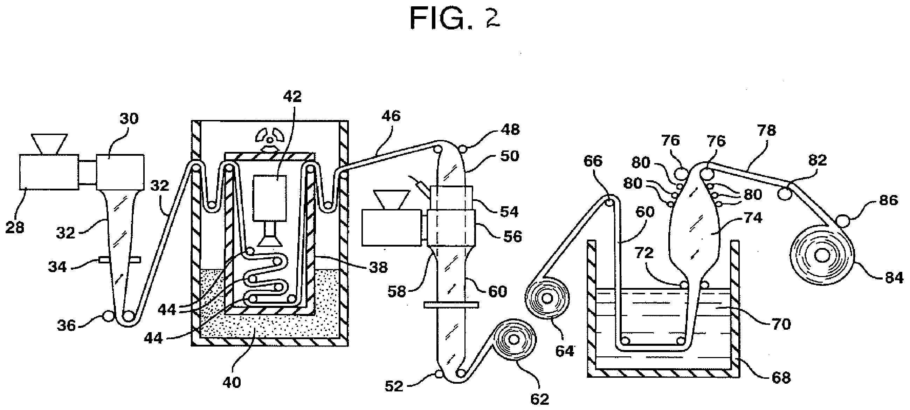

The film from which the heat shrinkable multilayer film tubing is made may be partially or wholly irradiated to induce crosslinking. In the irradiation process, the film is subjected to an energetic radiation treatment, such as corona discharge, plasma, flame, ultraviolet, X-ray, gamma ray, beta ray, and high energy electron treatment, which induce cross-linking between molecules of the irradiated material. The irradiation of polymeric films is disclosed in U.S. Patent No. 4,064,296, to BORNSTEIN, et. al.. BORNSTEIN, et. al. discloses the use of ionizing radiation for crosslinking the polymer present in the film. The extrusion coating process illustrated in FIG 2 (described below) allows various layers to be extruded and crosslinked before an irradiation-sensitive polyvinylidene chloride O₂-barrier layer and other layers are extruded on top of the irradiated, crosslinked substrate portion of the multilayer film tubing, resulting in a stronger tubing film, whereas a full coextrusion of all the layers together, followed by irradiation, could result in degradation of the PVDC layer, causing a decrease in its oxygen barrier properties.

To produce crosslinking, a suitable radiation dosage of high energy electrons, preferably using an electron accelerator, with a dosage level being determined by standard dosimetry methods. Other accelerators such as a Van de Graaf generator or resonating transformer may be used. The radiation is not limited to electrons from an accelerator since any ionizing radiation may be used. The ionizing radiation can be used to crosslink the polymers in the film. Preferably, the film is irradiated at a level of from 2-15 MR, more preferably 2-10 MR. As can be seen from the descriptions of preferred films for use in the present invention, the most preferred amount of radiation is dependent upon the film composition, thickness, etc., and its end use.

The outside film layer is the outside layer of the heat-shrinkable film tubing used to make the heat-shrinkable packaging article. The outside layer contains an outside layer polymeric composition. The outside layer polymeric composition comprises at least one member selected from the group consisting of polyolefin, ethylene/alpha-olefin copolymer, ethylene/unsaturated ester copolymer, ionomer resin, propylene/ethylene copolymer, polystyrene, polyamide, polyester, and polycarbonate.

The outside layer polymeric composition can have a density of less than 0.92 g/cc, or less than 0.915 g/cc, or less than 0.912 g/cc, or less than 0.910 g/cc, or less than 0.909 g/cc, or less than 0.908 g/cc, or less than 0.907 g/cc, or from 0.900 to 0.915 g/cc, or from 0.900 to 0.912 g/cc, or from 0.900 to 0.910 g/cc, or from 0.902 to 0.909 g/cc, or from 0.904 to 0.908 g/cc, or from 0.905 to 0.907 g/cc.

It is desirable to provide a dustless outside layer that not to block to itself, and that the outside surface of the packaging article has a low coefficient of friction. This can be accomplished by blending one or more fast-blooming or slow-blooming release agents (same as for the heat seal layer, described below), polysiloxane, and antiblock particulates into the outside layer.

The outside layer can comprise a slip agent. The slip agent can comprise at least one member selected from the group consisting of polysiloxane (including high molecular weight polysiloxane, and/or ultra-high molecular weight polysiloxane), erucamide, oleamide, stearamide, behenamide, oxidized polyethylene wax, glycerol monostearate, metallic stearate (e.g., calcium stearate, ethylene bis-stearamide), fatty acid amide, oxidized polyethylene, fatty acid ester, and fatty acid alcohol, and wax. The slip agent(s) may be present in the outside layer in a total amount of from 1,000 to 15,000 ppm, based on total weight of outside layer, from 1,500 to 12,000 ppm, from 2,000 to 10,000 ppm, from 2,000 to 8,000 ppm, from 2,000 to 6,000 ppm, from 2,500 to 5,000 ppm.

The use of polysiloxane and/or antiblock particulates in the outside layer is preferred over the use of release agents in the outside layer, as the release agents can interfere with printing of the outside layer.

It has been found that polysiloxane alone, or a combination of polysiloxane and antiblocking particulates, can provide the outside layer with desirable slip and antiblock properties, without adversely affecting printability and while providing relatively low haze. Polysiloxane alone, i.e., without antiblocking particulates and without release or slip aids, can suffice, and provide even lowerd haze while providing the packaging article with desired slip and antiblocking properties. Polysiloxane alone in the outside layer may be adequate for taped bags. For stacked bags, a combination of polysiloxane and antiblocking particulates can provide the packaging articles with the desired slip and antiblocking properties, and this combination enhances performance of the outside layers of the packaging article, and provides a readily printable outer surface for the packaging article. The presence of polysiloxane alone, or the combination of polysiloxane and antiblock particulates, can provide the packaging article with good machinability.

In an embodiment, polysiloxane is the only slip agent in the outside layer. The polysiloxane may be present in the outside layer in an amount of from 2,500 to 5,000 ppm, or from 3,000 to 4,000 ppm.

The outside layer can comprise antiblock particulates can have an average particle size of at least 3 microns (measured in accordance with ASTM D4664, or from 3µ to 25µ, or from 3µ to 15µ, or from 3µ to 12µ, or from 3µ to 9µ, or from 3.5µ to 6µ. The antiblock particulates can be present in the inside layer in an amount of from 1500-20,000 ppm, or from 2000-15,000 ppm, or from 2500 to 12,000 ppm, or from 4000-10,000 ppm, or from 6000-9000 ppm.

The outer layer may further comprise a printability enhancer comprising a polar polymer. Preferably, the polar polymer comprises at least one member selected from the group consisting of ethylene/ester/maleic anhydride terpolymer, ethylene/ester/glycidyl methacrylate terpolymer, and ethylene/acrylic acid copolymer. Preferably, the printability enhancer is present in the outer film layer in an amount of from about 1 to 25 percent, based on the weight of the outer film layer; more preferably, from about 2 to 20 percent; still more preferably, from about 5 to 15 percent; yet still more preferably, from about 5 to 10 percent.

The outside layer can have a thickness of at least 1.27 µm (0.05 mil), or from 1.27 to 38.1 µm (0.05 to 1.5 mils), or from 2.032 to 25.4 µm (0.08 to 1 mil), or from 2.286 to 20.32 µm (0.09 to 0.8 mil), or from 2.54 to 15.24 µm (0.1 to 0.6 mil), or from 3.302 to 10.16 µm (0.13 to 0.4 mil), or from 3.81 to 5.08 µm (0.15 to 0.2 mil).

The heat seal layer is the inside layer of the heat-shrinkable film tubing. The heat seal layer can contain a heat seal polymeric composition comprising at least one member selected from the group consisting of polyolefin, ethylene/alpha-olefin copolymer, ethylene/unsaturated ester copolymer, ionomer resin, propylene/ethylene copolymer, polystyrene, polyamide, polyester, and polycarbonate.

The heat seal layer contains a seal layer polymeric composition having a density of less than 0.92 g/cc, or less than 0.915 g/cc, or less than 0.912 g/cc, or less than 0.910 g/cc, or less than 0.909 g/cc, or less than 0.908 g/cc, or less than 0.907 g/cc, or less than 0.906 g/cc, or less than 0.905 g/cc, or less than 0.904 g/cc, or less than 0.903 g/cc, or from 0.900 to 0.915 g/cc, or from 0.900 to 0.912 g/cc, or from 0.900 to 0.910 g/cc, or from 0.901 to 0.909 g/cc, or from 0.902 to 0.908 g/cc, or from 0.903 to 0.907 g/cc.

The inside seal layer also comprises antiblock particulates, a fast-bloom release agent, and a slow-bloom release agent, each of which are as described in various locations herein. Each of these components are blended into and extruded with the polymeric components present in the film. The antiblock particulates can be of any of the various compositions described herein. The antiblock particulates are present in the inside seal layer in an amount of at least 2000 ppm, based on total seal layer weight, or from 1,500 to 20,000 ppm, or from 2,000 to 15,000 ppm, or from 2,500 to 12,000 ppm, or from 4,000 to 10,000 ppm, or from 6,000 to 9,000 ppm.

The antiblock particulates have a relatively large mean (i.e., average) particle size, as determined by ASTM D4664. The antiblock particulates can have an mean particle size of at least 3µ, or from 3µ to 20µ, or from 3µ to 15µ, or from 3µ to 12µ, or from 3µ to 9µ, or from 3.5µ to 6µ.

The fast-blooming release agent comprises at least one member selected from the group consisting of erucamide, oleamide, lauramide, lauric diethanolamide, monoglyceride, diglyceride, glycerol monoleate, and glycerol monostearate. The fast-blooming release agent can be present in the inside seal layer in an amount of at least 1200 ppm, based on total layer weight, or from 2,000 to 20,000 ppm, or from 2,500 to 15,000 ppm, or from 3,000 to 12,000 ppm, or from 4,000 to 10,000 ppm, or from 5,000 to 9,000 ppm.

Alternatively, the fast-blooming release agent can have a single fatty acid chain that is either unsaturated or less than about C₁₆ in length, or both. Alternatively, the slow-blooming release agent can have a single fatty acid chain that is saturated and greater than C₁₆ in length, or multiple fatty acid chains that are saturated or unsaturated, with a total carbon chain length of at least C₂₀.

The slow-blooming release agent comprises at least one member selected from the group consisting of stearamide, bis-stearamide, ethylene bis-stearamide, stearyl stearamide, stearyl erucamide, erucyl erucamide, behenamide, ethylene bis-oleamide, oleyl palmitamide, stearate ester, sorbitan stearate, mono stearate, di stearate, tri stearate, sorbitan monolaurate, pentaerythritol stearate ester, polyglycerol stearate, zinc stearate, calcium stearate, magnesium stearate, sodium stearate, potassium stearate. The slow-blooming release agent can be present in the inside seal layer in an amount of at least 1200 ppm, based on total layer weight, or from 2,000 to 20,000 ppm, or from 2,500 to 15,000 ppm, or from 3,000 to 12,000 ppm, or from 4,000 to 10,000 ppm, or from 5,000 to 9,000 ppm.

The heat seal layer can have a thickness of at least 2.54 µm (0.1 mil), or from 3.81 to 127 µm (0.15 to 5 mils), or from 4.572 to 101.6 µm (0.18 to 4 mils), or from 5.08 to 50.8 µm (0.2 to 2 mils), or from 2.54 to 38.1 µm (0.1 to 1.5 mil), or from 5.08 to 27.94 µm (0.2 to 1.1 mil), or from 6.35 to 25.4 µm (0.25 to 1 mil); or from 7.62 to 20.32 µm (0.3 to 0.8 mil), or from 8.89 to 17.78 µm (0.35 to 0.7 mil), or from 8.89 to 15.24 µm (0.35 to 0.6 mil), or from 10.16 to 15.24 µm (0.4 to 0.6 mil), or from 10.16 to 15.24 µm (0.4 to 0.6 mil), or about 11.938 µm (0.47 mil).

The multilayer heat-shrinkable film can contain one or more intermediate layers between the inside film layer of the tubing and the outside film layer of the tubing. The intermediate layers can comprise one or more (i) O₂-barrier layer, (ii) tie layers for adhering the barrier layer to the inside and./or outside film layers, and (iii) bulk layers for adding strength to the film. The O₂-barrier layer may be made from at least one member selected from the group consisting of polyvinylidene chloride, ethylene/vinyl alcohol copolymer, polyamide, and polyester. The design and arrangement of the O₂-barrier layer may be carried out to achieve any desired low level of oxygen transmission through the film, as known to those skilled in the art.

The one or more tie layer can include at least one member selected from the group consisting of ethylene/carboxylic acid copolymer, ethylene/ester copolymer, and anhydride-modified ethylene/alpha-olefin copolymer. Generally, tie layers are relatively thin, as their purpose is simply to provide a chemically compatible composition between two layers which otherwise do not bond with one another to a desired degree.

The one or more bulk layer can comprise at least one member selected from the group consisting of polyolefin, ethylene/alpha-olefin copolymer, ethylene/unsaturated ester copolymer, ionomer resin, propylene/ethylene copolymer, polystyrene, polyamide, polyester, and polycarbonate. Bulk layers are usually relatively thick, and/or are made from relatively strong polymers, as the purpose of bulk layers is to add strength, shrink (including free shrink as well as shrink force), puncture resistance, etc. to the film.

The antiblock particulates are hard particles that are provided to the inside layer and optionally to the outside layer. Although many of the particulates can be fully embedded within the thickness of the layer and thereby not affect the inside surface or the outside surface, at least some of the particulates protrude from the surface of the layer and cause the surface to be somewhat "rough," with the protruding regions reducing the degree to which adjacent film surfaces adhere to one another, and allowing the film surfaces to readily slide over one another.

It has been found that for heat-shrinkable packaging articles having relatively thick seal layers made from relatively low density polymeric composition, relatively large antiblock particles (e.g., 3 micron and up) at relatively high loading (at least 2000 ppm, based on layer weight) are required in order for the tubing to be openable by a Standard Openability Test as described below. The antiblock particulates can have an average particle size of at least 3 microns (measured in accordance with ASTM D4664, or from 3µ to 25µ, or from 3µ to 15µ, or from 3µ to 12µ, or from 3µ to 9µ, or from 3.5µ to 6µ. layer olAB Size: 3-25; 3-20; 3.2-15 microns; 3.5 to 10 microns; 4-7 microns; 4-6 microns; 4.5-5.5 microns. The antiblock particulates can be present in the inside layer in an amount of from 1500-20,000 ppm, or from 2000-15,000 ppm, or from 2500 to 12,000 ppm, or from 4000-10,000 ppm, or from 6000-9000 ppm.

The antiblock particulates are made from natural silica, synthetic silica, silicate, diatomaceous earth, fumed synthetic silica, precipitated synthetic silica, gelled synthetic silica, sodium calcium silicate, and sodium calcium aluminum silicate, talc, kaolin, clay, mica, silicate, aluminum silicate, silicon dioxide, magnesium silicate, calcium silicate, calcium carbonate, and magnesium oxide. Antiblock particulates having a refractive index of 1.4-1.6, or 1.45-1.55 are preferred, as having a refractive index in this range results in a heat shrinkable film of lower haze than if a antiblock particulates with a refractive index outside this range are used.

If the tubing is to be printed, the dust is applied after the ink has been dried, but before windup. If the tubing is not to be printed, the tubing is unrolled immediately before conversion to bags, with dust being applied after unwinding but before conversion. The conversion of the dusted tubing (whether printed or unprinted) is carried out by sealing and cutting the tubing to form either end-seal bags or side-seal bags. The sealing can be carried out using an impulse type heat sealer. Cutting of the tubing to form discrete bags is carried out after sealing, using conventional film cutting methodologies.

For many uses, consumers and others place higher value on a packaging article exhibiting a low level of haze. Haze is determined by the level of clarity through the entire film thickness. Haze measurements, as reported herein, are determined using ASTM D1003-13. The heat-shrinkable film can have a haze level of less than 15%, or less than 12%, or less than 10%, or from 5% to 10%.

It has been found that the haze level exhibited by the heat-shrinkable film is somewhat proportional to the amount and type of antiblocking particulates used in the inside layer and the outside layer of the film tubing. In general, the higher the particulate level, the higher the haze level. The use of particulate materials having a refractive index of from 1.4 to 1.6, or from 1.45 to 1.55, helps to minimize the effect on haze from the antiblock particulates. It has been found that the use of relatively large particulates (average particle size of from 3µ to 10µ) in relatively controlled amounts (e.g., up to about 9,000 ppm, based on layer weight), allows a heat shrinkable film to be made that exhibits relatively high gloss while having desirable slip and antiblock and openability characteristics.

For many uses, consumers and others place higher value on a packaging article exhibiting a high level of gloss. Gloss is determined largely by the character of the outside surface of the packaging article. Gloss measurements, as reported herein, are specular gloss measurements obtained using ASTM D2457.

Providing the outside layer with release agents, antiblocking particulates, and slip agents can lower the gloss level exhibited by the packaging article. It has been found that the outside surface of the heat-shrinkable packaging article can exhibit relatively high gloss while at the same time possessing the desired antiblocking and slip properties, by providing the outside layer with polysiloxane alone, or with the combination of polysiloxane and antiblock particles. In this manner, the specular gloss can be at least 70% (measured per ASTM D2457), or at least 75%, or at least 78%, or at least 80%, or from 80% to 85%.

It is desirable for the outside layer of the packaging article to have a low coefficient of friction so that it readily slides relative to other packaging articles it is in contact with, without disturbing any other packaging article it may contact. This is particularly important when using imbricated bags on tapes or stacked bags in a box or other dispenser.

It is also desirable for the inside layer of the packaging article to have a low coefficient of friction relative to itself, as it is in contact with itself when the packaging article tubing is in its lay-flat configuration. This allows air to move freely between the lay-flat inside surfaces of the tubing, to prevent air from getting trapped or crushed during passage of the tubing through nip rollers, as is required during printing of the packaging articles as well as during converting of heat shrinkable film tubing into heat shrinkable packaging articles such as bags.

The coefficient of friction (COF) can be determined per ASTM D 1894. The inside and/or outside surfaces of the packaging article can have a peak value coefficient of friction of less than 0.8, or less than 0.7, or less than 0.6, or less than 0.5, or from 0.1 to 0.8, or from 0.1 to 0.7, or from 0.1 to 0.6, or from 0.1 to 0.5. The inside and/or outside surfaces of the packaging article can have an instantaneous value coefficient of friction of less than 0.6, or less than 0.5, or less than 0.4, or less than 0.3, or from 0.1 to 0.6, or from 0.1 to 0.5, or from 0.1 to 0.4, or from 0.1 to 0.3.

Although it is desirable to completely eliminate dust from the packaging article, dust can be provided to the inside of the tubing which is used to make the packaging article while the outside remains dustless, or dust can be provided to the outside of the packaging article while the inside is dustless. If dust is used on the inside or on the outside, the dust can comprise at least one member selected from the group consisting of corn starch, tapioca starch, potato starch, talc, and silica.

FIG 1 illustrates a cross-sectional view of multilayer heat shrinkable film 20. In the examples below, Film Nos. 1-11 have cross-sections which correspond with the layer number and arrangement illustrated in FIG 1. Heat shrinkable film 20 has seven layers in which first layer 21 is an outer film layer which functions as an inside product-contact layer and heat seal layer. Second layer 22 functions as a first bulk layer. Third layer 23 functions as a first tie layer. Fourth layer 24 functions as an oxygen barrier layer. Fifth layer 25 functions as a second tie layer. Sixth layer 26 functions as a second bulk layer. Seventh layer 27 functions as an abuse layer.

Heat-shrinkable film tubing can be produced in accordance with a process schematically illustrated in Figure 2. In the process illustrated in Figure 2, solid polymer beads (not illustrated) are fed to a plurality of extruders 28 (for simplicity, only one extruder is illustrated). Inside extruders 28, the polymer beads are forwarded, melted, and degassed, following which the resulting bubble-free melt is forwarded into die head 30, and extruded through an annular die, resulting in tubing 32 which can be, for example, about 381 µm (15 mils) thick and which includes the seal layer, the first bulk layer and the first tie layer. Through a passageway inside of die head 30, a continuous stream of cornstarch dust (C-3170 cornstarch obtained from Flint Group; see AB10 in Table 1, below) is injected into the interior of tubing 32, at a rate so that the amount of corn starch powder deposited onto the inside surface of tubing 32 is adequate to prevent blocking of the tubing to itself both as the tubing is collapsed into lay-flat configuration as well as after biaxial orientation in the trapped bubble process, as described below. The amount of dust placed into the inside of the tubing can be, for example, about 95 milligrams per 645.16 cm² (100 square inches) of the inside surface of the unoriented tubing 32. Other types of dust which can be used include tapioca dust and potato starch dust, talc, and silica.

After cooling or quenching by water from cooling ring 34, tubing 32 is collapsed by pinch rolls 36, and is thereafter fed through irradiation vault 38 surrounded by shielding 40, where tubing 32 is irradiated with high energy electrons (i.e., ionizing radiation) from iron core transformer accelerator 42. Tubing 32 is guided through irradiation vault 38 on rollers 44. Preferably, tubing 32 is irradiated to a level of from about 3 to 8 MR.

After irradiation, irradiated tubing 46 is directed through pinch rolls 48, following which irradiated tubing 46 is slightly inflated, resulting in trapped bubble 50. However, at trapped bubble 50, the tubing is not significantly drawn longitudinally, as the surface speed of nip rolls 52 are about the same speed as nip rolls 48. Furthermore, irradiated tubing 46 is inflated only enough to provide a substantially circular tubing without significant transverse orientation, i.e., without stretching.

Slightly inflated, irradiated tubing 50 is passed through vacuum chamber 54, and thereafter forwarded through coating die 56. Second tubular film 58 is melt extruded from coating die 56 and coated onto slightly inflated, irradiated tube 50, to form two-ply tubular film 60. Second tubular film 58 preferably comprises an O₂ barrier layer, which does not pass through the ionizing radiation. Further details of the above-described coating step are generally as set forth in U.S. Patent No. 4,278,738, to BRAX et. al..

After irradiation and coating, tubing film 60 is wound up onto windup roll 62. Thereafter, windup roll 62 is removed and installed as unwind roll 64, on a second stage in the process of making the heat-shrinkable tubing film as ultimately desired. Tubular film 60, from unwind roll 64, is unwound and passed over guide roll 66, after which two-ply tubular film 60 passes into hot water bath tank 68 containing hot water 70. The now collapsed, irradiated, coated tubular film 60 is submersed in hot water 70 (having a temperature of about 185°F) for a retention time of at least about 30 seconds, i.e., for a time period in order to bring the film up to the desired temperature for biaxial orientation. Thereafter, irradiated tubular film 60 is directed through nip rolls 72, and bubble 74 is blown, thereby transversely stretching tubular film 60. Furthermore, while being blown, i.e., transversely stretched, nip rolls 76 draw tubular film 60 in the longitudinal direction, as nip rolls 76 have a surface speed higher than the surface speed of nip rolls 72.

As a result of the transverse stretching and longitudinal drawing, irradiated, coated biaxially-oriented blown tubing film 78 is produced, this blown tubing preferably having been both stretched in a ratio of from about 1:1.5 - 1:6, and drawn in a ratio of from about 1:1.5-1:6. More preferably, the stretching and drawing are each performed a ratio of from about 1:2 - 1:4. The result is a biaxial orientation of from about 1:2.25 - 1:36, more preferably, 1:4 - 1:16. While bubble 74 is maintained between pinch rolls 72 and 76, blown tubing 78 is collapsed by rolls 80, and thereafter conveyed through pinch rolls 76 and across guide roll 82, and then rolled onto wind-up roll 84. Idler roll 86 assures a good wind-up.

The resulting biaxially-oriented heat-shrinkable film tubing is thereafter unwound and converted into heat-shrinkable bags by sealing and cutting across the tubing. Optionally, the bags may have printing applied to the outside surface. During printing, the ink is applied to the tubing before the tubing is converted into bags. In addition to preventing the inside of the oriented film tubing from blocking to itself, the cornstarch dust present inside the film tubing also allows the tubing to slide against itself and allows air within the film tubing to move inside the tubing so that creasing of the tubing is reduced or eliminated as the tubing passes through nip rollers used in processing, including printing.

Furthermore, during conversion of the oriented film tubing into bags, the same cornstarch dust was applied to the outside of the tubing. The cornstarch dust was applied to the outside surface of the tubing at a level of about 95 milligrams per 645.16 cm² (100 square inches) .The cornstarch dust can be applied using a metering roller or gravity feed. The cornstarch dust can be applied to only one side of the tubing while the tubing is in a lay-flat configuration. Thereafter, when the dusted heat-shrinkable film tubing is wound up to form a roll of tubing, the dust applied to the one lay-flat side transfers to the other lay-flat side while the first lay-flat side contacts the second lay-flat side in the roll of wound-up, dusted, heat-shrinkable film tubing.

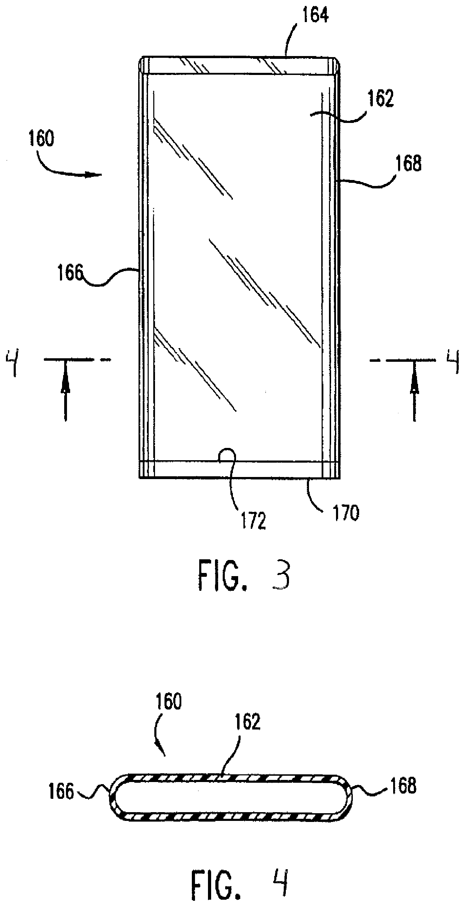

FIG 3 is a schematic of a heat-shrinkable end-seal bag 160 in lay-flat configuration. End-seal bag 160 is made from the heat-shrinkable film seamless tubing 162. FIG 4 is a cross-sectional view of bag 160 taken through section 4-4 of FIG 3. Viewing FIGs. 3 and 4 together, bag 160 comprises bag film 162, top edge 164 defining an open top, first bag side edge 166, second bag side edge 168, bottom edge 170, and end seal 172.

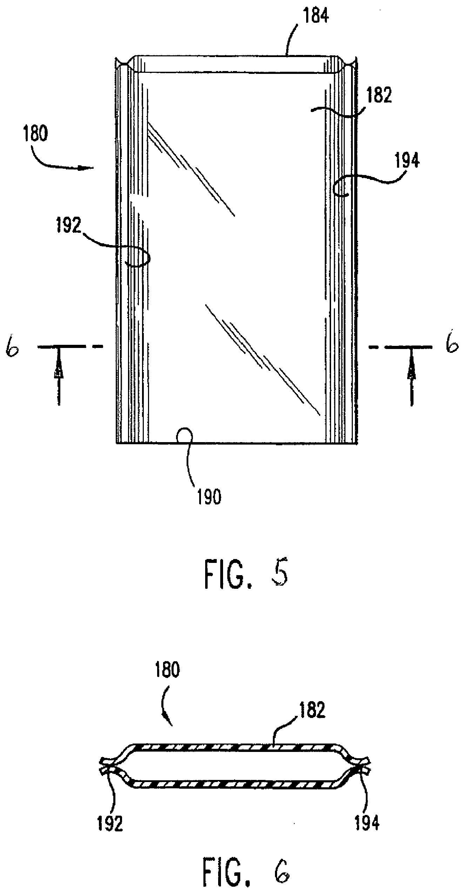

Figs 5 and 6 together illustrate heat-shrinkable side-seal bag 180 in lay-flat configuration.. FIG 6 is a cross-sectional view of bag 180 taken through section 6-6 of FIG 5. Side-seal bag 180 is also made from the heat-shrinkable film tubing as with the end-seal bag of FIGs 3 and 4, but in making side-seal bag 180 the seamless tubing has been slit in the machine direction to form bag top 184, and heat sealed across the tubing to make side seals 192 and 194, with the machine direction orientation of the film 182 running transversely across side-seal bag 180. Viewing FIGs. 5 and 6 together, side-seal bag 180 is made from bag film 182 which is heat sealed to itself. Side seal bag 180 has top edge 184 defining an open top, folded bottom edge 190, first side seal 192, and second side seal 194.

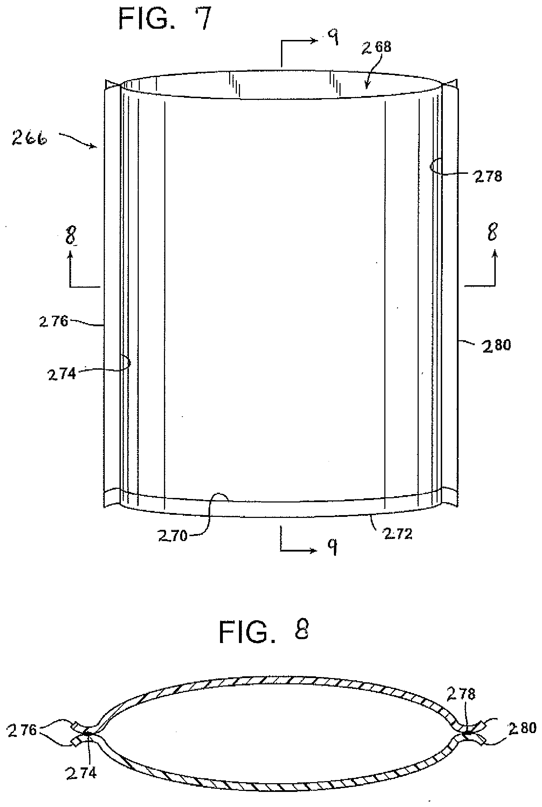

FIG 7 illustrates pouch-type bag 66 made from sealing two separate pieces of flat film together. Pouch-type bag 66 has open top 68, bottom heat seal 70 and bottom edge 72, first side seal 74 and first side edge 76, second side seal 78 and second side edge 80. Together, first and second side seals 74 and 76 connect with bottom seal 70 to form a "U-shaped" seal connecting the two pieces of flat film together to form the pouch-type bag 66.

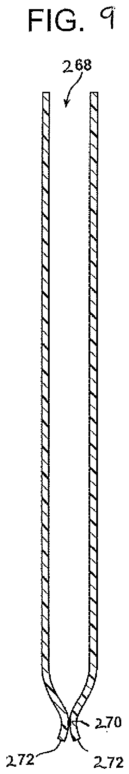

FIGs 7, 8, and 9 illustrate a pouch-type bag 266 made from sealing two separate pieces of flat film together. In FIGs 7, 8, and 9, pouch 266 has open top 268, bottom heat seal 270 and bottom edge 272, first side seal 274 and first side edge 276, second side seal 278 and second side edge 280. Together, first and second side seals 274 and 276 connect with bottom seal 270 to form a "U-shaped" seal connecting the two pieces of flat film together to form the pouch-type bag 266.

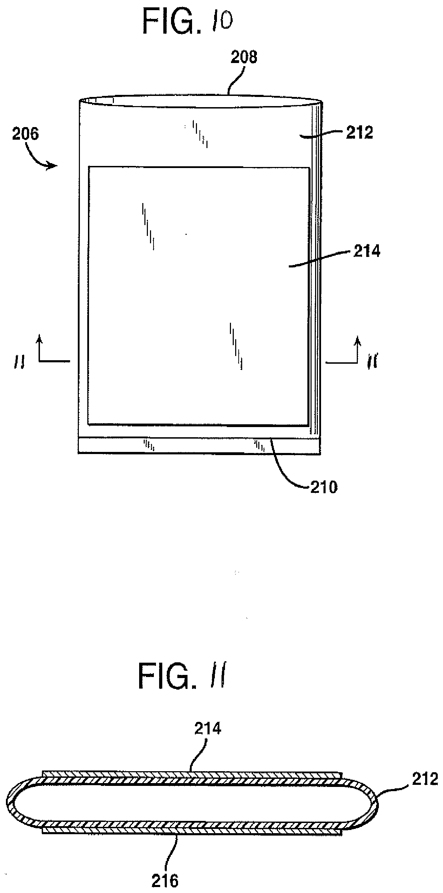

FIGs 10 and 11 illustrate end-seal patch bag 206, in lay-flat configuration. End seal patch bag 206 is a seamless tubular film 212 to which patches 214 and 216 are adhered. Bag 206 has end seal 210 and open top 208. Each patch is confined to one lay-flat side of bag 206, with end seal 210 being of the inside layer of tubular film 212 to itself. End seal 210 is not through either of patches 214 or 216. In addition, patches 214 and 216 do not extend all the way to either of the folded lay-flat side edges of end-seal bag 206.

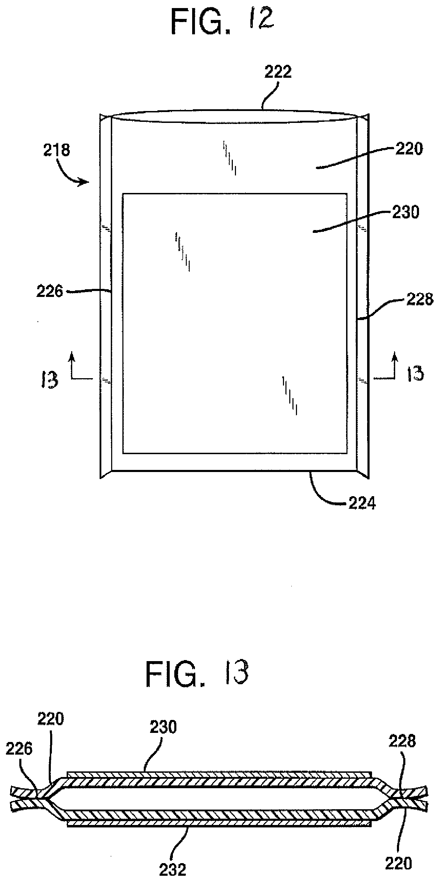

FIGs 12 and 13 illustrate side-seal patch bag 218, in lay-flat configuration. Side-seal patch bag 218 is made up of folded bag film 220 to which are adhered first patch 230 and second patch 232. Bag film 220 has seamless (i.e., folded) bottom edge 224, open top 222, first side seal 226, and second side seal 228, with each of side seals 226 and 228 being of the inside layer of the tubing to itself. Each of patches 230 and 232 are confined to a lay-flat side of bag 220, with the patches not extending to either of side seals 226 or 228, or to open top 222 or folded bottom 224.

Additional patch bags are disclosed in the following US patent documents: (A) US 6,287,613; US 6,383,537; US 5,540,646; US 5,545,419; US 6,270,819; US 6,790,468; US 6,663,905; US 6,296,886; US 7,338,691; US 5,534,276; US 6,228,446; and US 7,048,125.

It has been found that the "green strength" (i.e., strength of the adhesive bond between the patch film and the tubing within 15 minutes after the patch and tubing films contact one another with adhesive therebetween) is significantly enhanced by the presence of antiblocking particulates in the outside layer of the tubing film. For example, the outside layer of the heat-shrinkable film tubing can comprise antiblock particulates having an average particle size of from 3000 microns to 10,000 microns, with the antiblock particulates being present in the outside layer in an amount of from 3000 to 10,000 ppm. The result can be that the patch film is adhered to the outside surface of the film tubing with a green bond strength of at least 0.18 kg/cm (1 lb/in) of patch width measured within 15 minutes of application of patch film to film tubing, versus 0.11 kg/cm (0.6 lb/in) of patch width without the presence of the antiblock particulates.

### Bag Openability Test: Apparatus and Set-Up

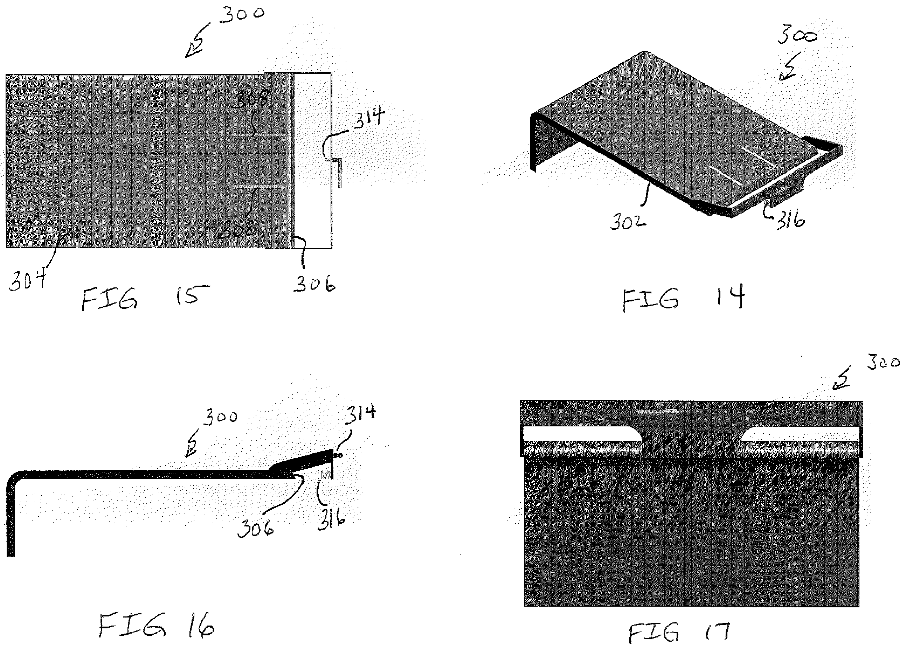

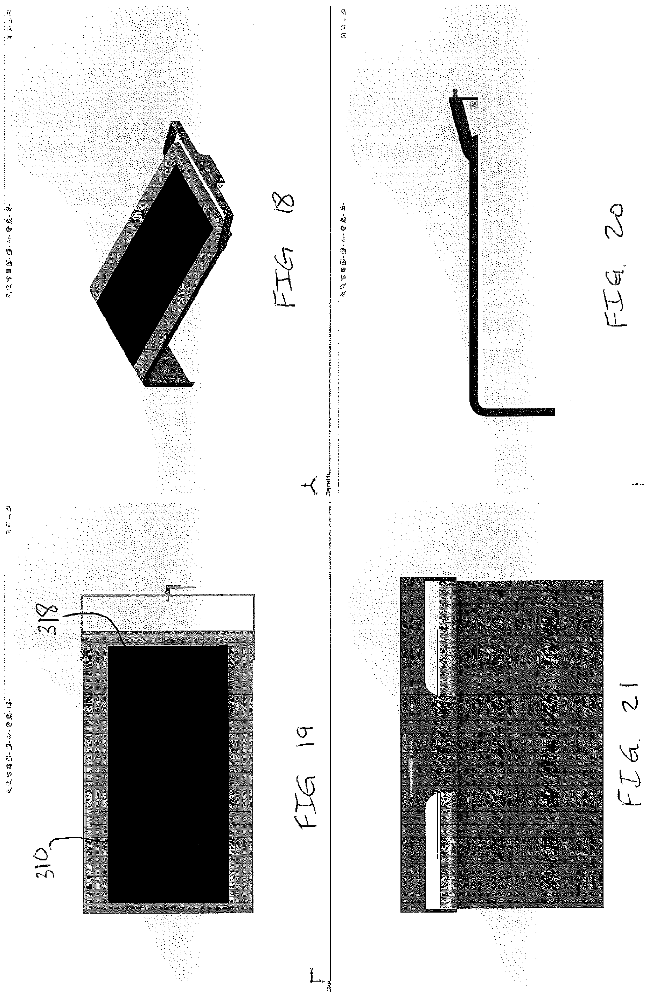

FIG 14 illustrates a perspective view of a schematic of a Standard Bag Openability Test Apparatus 300, which has horizontal bag platform 302 having top surface 304 for supporting a bag 310 in lay-flat configuration (See FIGs 18-21). Bag platform 302 is designed to be long enough and wide enough to provide full lengthwise and widthwise support to the longest bag to be tested for openability on test apparatus 300.

Adhered to top surface 304 of bag platform 302, extending rearward from front edge 306 of bag platform 302 in a direction perpendicular to front edge 306 of bag platform 302, are a pair of bag-holding tapes 308, each of which extends 3.81 cm (1.5 inches) down the length of the bag platform 302. See FIG 15.

Each of tapes 308 is secured "sticky side up" to the top surface of bag platform 302, by applying glue or double stick tape beneath the backside of each of tape 308, i.e., to hold tapes 308 down on top surface 304 of bag platform 302. Each of bag-holding tapes 306 have a width of 6 mm, with the "sticky side" of the tapes having an adhesion to steel of at least 90 g/6mm measured in accordance with AFERA 4001-ED.10/87. One such tape is BN 39 bag tape, obtained from Boston tapes S.p.A. of Sessa Aurunca, Italy.

The spacing between the two pieces of tape 308 is dependent upon the lay-flat width of the bag being tested. More particularly, centerlines running down the center of each of the two pieces of tape 308 are spaced apart a distance of one third of a total lay-flat width of the packaging article being tested. This arrangement is readily apparent in FIG 19, in which tapes 306 are spaced apart by one third of the lay-flat width of bag 310.

Outward of front edge 306 of bag platform 302 is mounting bracket 312 which has mounted thereon both air nozzle 314 and air knife 316. Air nozzle 314 has a tip positioned along a centerline of the bag, the centerline being inclined 15° from horizontal. Air nozzle 314 has a tip positioned 7.62 cm (3 inches) from lip 318 of bag 310. Air knife 316 has a top surface (i.e., surface oriented towards bag 310) which is coincident with bag platform 302 and an air discharge line parallel to, and 13.97 cm (5.5 inches) from, both front edge 306 and bag lip 318.

Not illustrated in FIGs 14-21 are control solenoid valves and air conduits for providing 20.8 scfm of clean, dry compressed air at 100 psi to air nozzle 314, and same for providing clean, dry compressed air to air nozzle 314 and air knife 316. Also not illustrated in FIGs 14-21 is the compressor for generating the compressed air.

### Conducting the Bag Openability Test

The Bag Openability Test is carried out by first storing a heat-shrinkable film tubing in lay-flat configuration while wrapped around an 8 cm diameter core for 7 days, with the strand of the multilayer heat-shrinkable film tubing being wound onto the core until a total diameter (core plus wound film) of 48 cm is achieved, with the film tubing being wound onto the core until a total diameter (core plus wound film tubing) of 48.26 cm (19 inches) is reached, with the film tubing being wound at a tension of 179 g/cm of lay-flat tubing width, at a conclusion of which the wound tubing is allowed to remain at ambient conditions for 7 full days, with the film tubing thereafter being unwound until the windings are 2.54 cm (1 inch) from the core. At that point a portion of the film tubing is removed and converted into end-seal bags and tested in accordance with the Bag Openability Test procedure, as set forth immediately below.

The packaging article, in lay-flat configuration, is then placed on the on top surface 304 of bag platform 302, with the bag lip 318 being directly over the front edge 306 of bag platform 302. The packaging article 310 has a lay-flat width of at least 8.89 cm (3.5 inches) and a lay-flat length of at least 10.16 cm (4 inches).

The packaging article 310 is initially in its lay-flat configuration, with the lower lay-flat side being held down against top surface 304 of bag platform 302 by the pair of bag-holding tapes 308, each of which extends 3.81 cm (1.5 inches) down the length of the packaging article. Each of the pair of tapes has a width of 6 mm and an adhesion to steel of at least 90 g/6mm measured in accordance with AFERA 4001-ED.9/79. Each of the tapes runs for a length of 3.81 cm (1.5 inches) from the linear leading edge of the packaging article in a direction perpendicular to the open top edge of the packaging article, and each tape has a centerline placed at a position corresponding with 33.3% of a distance across the lay flat width of the packaging article, with the lip of the packaging article being parallel to and directly above the leading edge 306 of support member 302. At this point there is no airflow through air nozzle 314 or air knife 316, and the packaging article 310 on the test apparatus 300 appears as illustrated in FIGs 18, 19, 20, and 21.

Once the packaging article is positioned on top surface 304 of platform 302 and held in place by tapes 308, a first solenoid is activated to supply compressed air to air nozzle 314 and simultaneously a second solenoid is activated to supply compressed air to air knife 316. The compressed air is supplied to the air nozzle for 500 milliseconds, at which time the first solenoid is closed, thereby shutting off further air to the air nozzle. The compressed air supplied to the air knife continues for 2 full seconds, after which time the second solenoid is closed, thereby shutting off further air to the air knife.

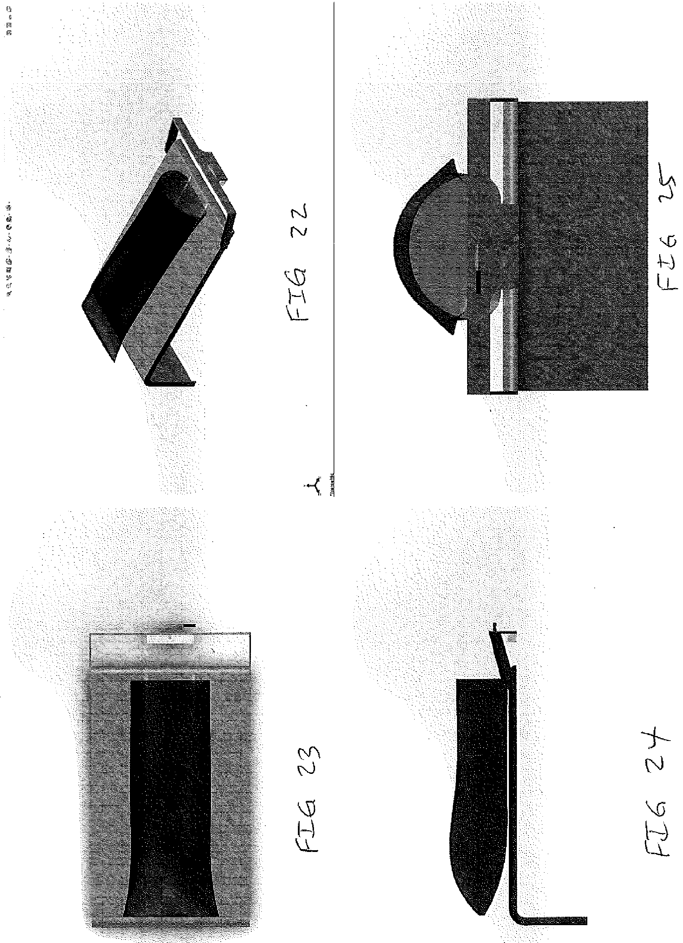

At the end of the two seconds of airflow through air knife 316, the packaging article is deemed "openable" if it inflates with air, i.e., the article appears as illustrated in FIGs 22, 23, 24, and 25. As is apparent ion FIGS 22-25, if the article inflates, the lay-flat sides are separated by the airflow passing through air knife 316.

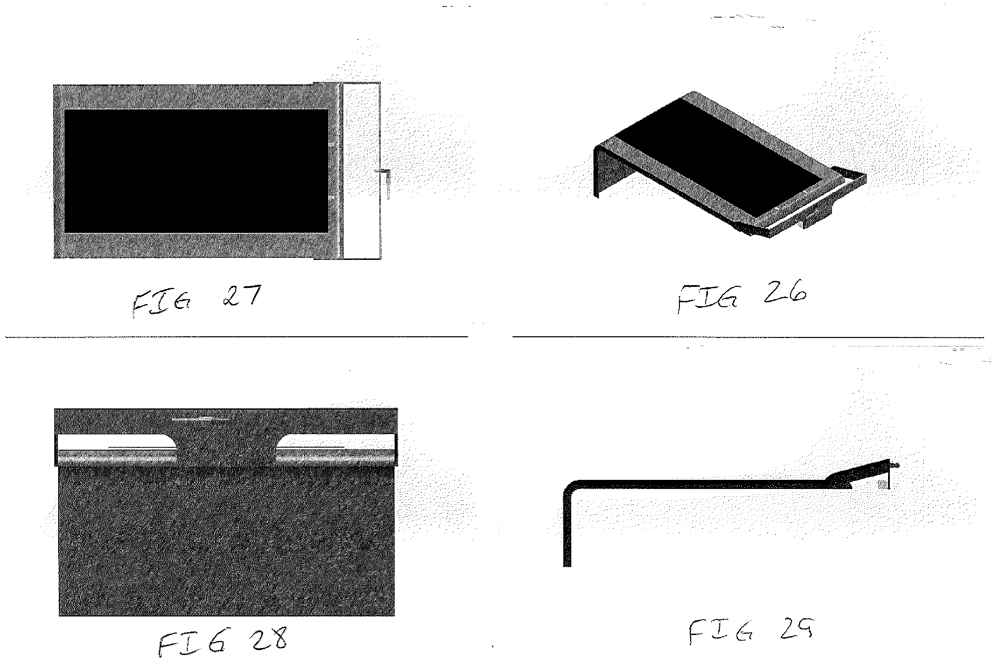

On the other hand, if at the end of the two seconds of airflow through air knife 316 the packaging article 310 is deemed "not openable," the article does not inflate with air, i.e. , the article appears as illustrated in FIGs 26, 27, 28, and 29. This appearance results if the inside layer of the tubing adheres to itself (i.e., "blocks") to a degree that the airflow from the air nozzle followed by the air knife is inadequate to open the packaging article.

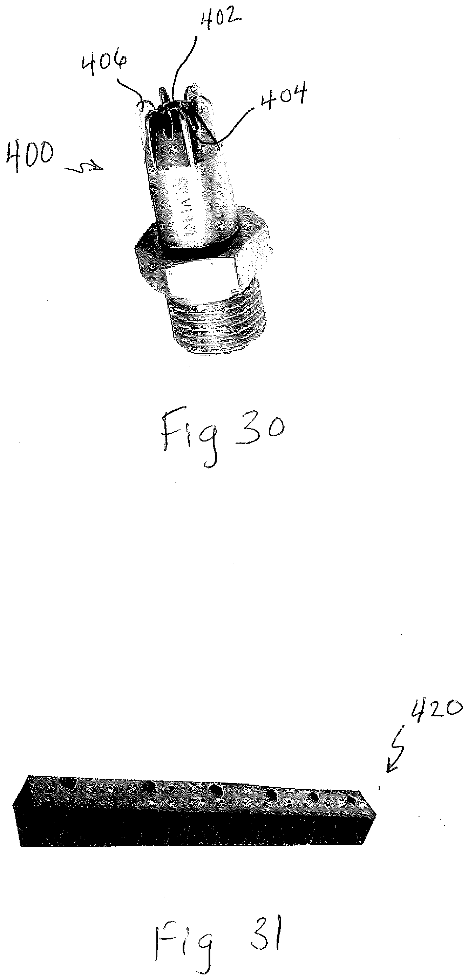

FIG 30 is a perspective view of air nozzle 400 to be used with test apparatus 300. Air nozzle 400 is commercially available as SILVENT 1011 stainless steel Laval nozzle. Air nozzle 400 has 1/8" male thread, has central hole 402 that creates a concentrated, supersonic jet of air, and surrounding central hole 402 has six diverging slots 404 for generating a laminar air stream. Also surrounding central hole are six fins 406 which serve to prevent dead end static pressure from exceeding 210 kPa. The SILVENT 1011 Laval air nozzle can be obtained from Silvent AB. at Vevgatan 15, SE-504 64 Boras, Sweden.

FIG 31 is a perspective view of air knife 420 to be used with test apparatus 300. Air knife 420 is commercially available as Aluminium Strip Airmover SE150 from Brauer Clamps USA Inc of Warren, Michigan. Air knife 420 uses the energy from a small volume of compressed air, supplied from a standard compressor, to amplify surrounding air to a high velocity, high volume, low pressure output airflow using the coanda effect.

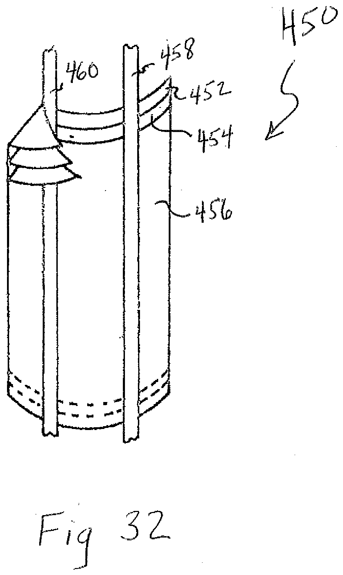

FIG 32 is a schematic of taped bag assembly 450 comprising bags 452, 454, 456 held in shingled set of imbricated bags (shingled bags, in overlapping relationship) held in place relative to one another by their adhesion to the adhesive side of parallel tapes 458 and 460. Such imbricated bags assemblies 450 are provided in long strands containing hundreds or even thousands of bags, supplied to bag loading devices. Imbricated bags held by tapes, such as the two parallel tapes illustrated in FIG 32, and the use of assemblies comprising such imbricated bags on tapes and their use in product loading devices, are disclosed in USPN 3,587,843, USPN 3,698,547, USPN 4,032,038 and USPN 4,076,122.

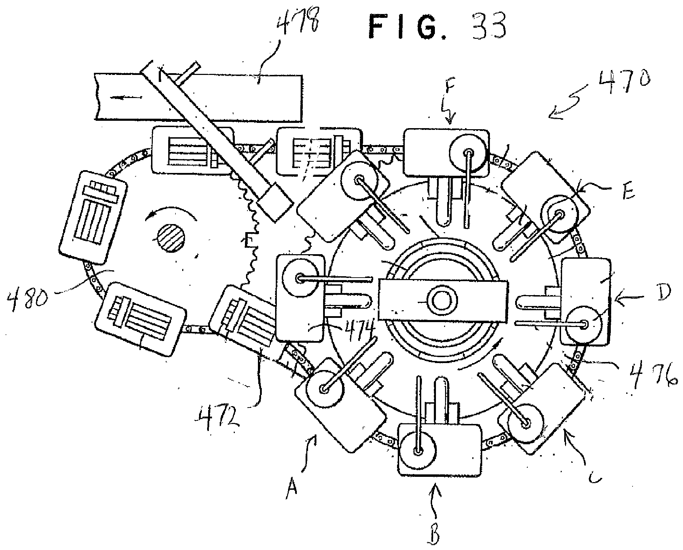

FIG 33 is a schematic illustration of a top view of rotary chamber vacuum machine 470 which has for decades been in use for the packaging of a wide variety of packaged meat products (not illustrated). A heat-shrinkable bag having a product therein (not illustrated) is placed on platen 472 which is in the product loading zone. Thereafter, chamber lid 474 rotates over and drops onto platen 472 as the vacuum chamber carousel assembly 476 rotates counterclockwise to position A, then B, then C, then D, then E, during which movement of platen 472 and chamber 474 the atmosphere is evacuated from within the chamber and from inside the bag, the bag is sealed closed and the excess bag length cut off and sucked away to a waste area. Then, at position F, the vacuum is released and air fills the chamber and chamber 474 lifts off platen 472 allowing the vacuum packaged product to be directed off of platen 474 and onto conveyor 478 for further processing, such as passage through a hot air tunnel (not shown) to shrink the bag film tight around the meat product. The counterclockwise rotary motion of vacuum chamber carousel assembly 476 is continuous throughout the process, as is the associated counterclockwise rotation of platen carousel assembly 480.

### Examples

Various films were produced in the form of multilayer heat-shrinkable film tubings, using the process illustrated in FIG 2, described above. Although these tubings could have been converted into a variety of heat shrinkable packaging articles, such as end seal bags, side seal bags, and casings, the tubings were converted into packaging articles (i.e., end-seal bags as illustrated in FIGs 3 and 4), which were thereafter tested for openability. The structures of these films, including the layer arrangement, layer composition, and layer thicknesses, are provided in various tables below. The resins and other components utilized in these films are provided in Table 1, immediately below.

**Table 1**

| **Resin code** | **Tradename** | **Generic Resin Name {additional information}** | **Density (g/cc)** | **Melt Index (dg/min)** | **Supplier** |
|---|---|---|---|---|---|
| SSPE 1 | AFFINITY^{®} PL 1281G1 | Homogeneous ethylene/octene copolymer | 0.900 g/cc | 6.0 | Dow |
| SSPE 2 | AFFINITY^{®} PL 1850G | Homogeneous ethylene/octene copolymer | 0.902 | 3.0 | Dow |
| SSPE 3 | ENGAGE^{®} 8157 | Homogeneous ethylene/octene copolymer | 0.868 | 0.50 | Dow |
| SSPE 4 | EXCEED^{®} 3812 CB | Homogeneous ethylene/hexene | 0.912 | 3.8 | Exxon Mobil |
| SSPE 5 | EXACT^{®} 3024 | Homogeneous ethylene/butene copolymer | 0.905 | 4.5 | Exxon Mobil |
| SSPE 6 | EXCEED^{®} 10 12HJ | Homogeneous ethylene/hexene copolymer | 0.912 | 1.0 | Exxon Mobil |
| SSPE7 | EXCEED^{®} 4518PA | Homogeneous ethylene/hexene copolymer | 0.918 | 4.5 | Exxon Mobil |
| VLDPE1 | XUS 61520.15L | Very low density polyethylene | 0.903 | 0.5 | Dow |
| VLDPE2 | CV77525 | Very low density polyethylene | 0.906 | 0.45 | Westlake Chemical |
| VLDPE3 | CV77519 | Very low density polyethylene | 0.906 | 0.5 | Westlake Chemical |
| LLDPE 1 | DOWLEX^{®} 2045.03 | Linear Low Density Polyethylene | 0.920 | 1.1 | Dow |
| LLDPE 2 | LL 3003.32 | Heterogeneous Ethylene/hexene copolymer | 0.9175 | 3.2 | Exxon Mobil |
| LLDPE 3 | DOWLEX^{®} 2045.04 | Linear low density polyethylene | 0.920 | 1.0 | Dow |
| LLDPE 4 | CV77518 | Linear low density polyethylene | 0.910 | 2.0 | Westlake Chemical |
| LLDPE5 | CV77523 | Linear low density polyethylene with 18,000 ppm antiblock & 1150 ppm slip | 0.906 | 0.5 | Westlake Chemical |
| LLDPE6 | SC74877 | Linear low density polyethylene with 7,000 ppm antiblock | 0.915 | 0.75 | Westlake Chemical |
| znPEC | PRO-FAX^{®} SR257M | Ziegler Natta propylene/ethylene copolymer | 0.90 | 2.0 | Lyondell Basell |
| ssPEC1 | VERSIFY^{®} 3000 | Homogeneous propylene/ethylene copolymer | 0.891 | 8.0 | Dow |
| ssPEC2 | VISTAMAX X 3020FL | Homogeneous propylene/ethylene copolymer | 0.874 | 2.5 | Exxon Mobil |
| EVA 1 | ESCORENE^{®} LD 713.93 | Ethylene/vinyl acetate copolymer (14.4%VA) | 0.933 | 3.5 | Exxon Mobil |
| EVA 2 | EB524AA | Ethylene/vinyl acetate copolymer (14.5% vinyl acetate) | 0.934 | 3.5 | Westlake Chemical |
| EVA 3 | ATEVA^{®} 2861A | Ethylene/vinyl acetate copolymer (28% vinyl acetate) | 0.949 | 6 | Celanese Chemicals |
| EVA 4 | ESCORENE^{®} LD 716.36 | Ethylene/vinyl acetate copolymer (26.7% vinyl acetate) | 0.951 | 5.75 | Exxon Mobil |
| PVDC1 | SARAN^{®} 806 | Vinylidene chloride / methyl acrylate copolymer | 1.69 | - - - | Dow |
| PVDC2 | IXAN^{®} PV910 | Vinylidene chloride / methyl acrylate copolymer | 1.71 | - - - | Solvin |
| FP | IP-1121 | Fluoropolymer in LLDPE (2% fluoropolymer) | 0.92 | 2 | Ingenia Polymers |
| AB1 | KAOPOLITE ^{®} SF | 100% Aluminum silicate antiblock (0.7µ) | 2.62 | --- | Kaopolite Inc |
| AB2 | SUPERFINE SUPER FLOSS | 100% Silica - calcined diatomaceous earth (3.5µ) | 2.3 | --- | Celite |
| AB3 | 103228 | 20 wt % Amorphous Silica in LLDPE (5µ) | 608.7 kg/m³ (38 lb/ft³) | 1.8 | Ampacet |
| AB4 | SILTON^{®} JC-50 | 100% Sodium aluminosilicate (5µ antiblock) (refractive index 1.50) | 1.05 | --- | Mitsui Chemical |
| AB5 | 1000214-N | 70 wt % silica in LLDPE (9µ) | 1.66 | --- | Ampacet |
| AB6 | IP1091 | 25% Antiblock (7.6µ) | --- | --- | Ingenia Polymers |
| AB7 | MB25-502 | 25 wt % high molecular weight siloxane Slip additive | 0.94 | 6.3 | Dow Corning |
| AB8 | ZEEOSPHER E W410 | 100% Alkali-aluminosilicate ceramic spheres (4µ antiblock) (refractive index 1.53) | 2.4 | --- | 3M |
| AB9 | ZEEOSPHER E W210 | 100% Alkali-aluminosilicate ceramic spheres (3µ antiblock) | 2.4 | --- | 3M |
| AB10 | C-3170 corn starch | Corn starch* (13-15.5µ avg. part. size) | --- | --- | Flint Group |
| AB11 | PM16815 | 50% silica antiblock | 1.37 | --- | Techmer |
| WAX1 | KEMAMIDE W-40 Prill | 100% N,N'-ethylene-bis-stearamide wax | 0.995 | --- | PMC - Biogenix |
| WAX2 | KEMAMIDE E Ultra Bead | 100% Erucamide wax | 0.8150 | 81°C mp | PMC - Biogenix |
| AB&S 1 | FSU 255E | 25.0 wt % diatomaceous earth silica (15µ) and 5.0 wt % erucamide in 67.9 wt % LDPE | 1.08 | 9 | Schulman |
| AB&S2 | SYLOBLOC^{®} M150 | 50 wt % Amorphous silica (5µ) with 50% oleamide | 2.1 | --- | Grace Davison |
| AB&S3 | SYLOBLOC^{®} M250 | 50 wt % Amorphous silica (5µ) with 50 wt % erucamide | 2.1 | --- | Grace Davison |
| AB&S4 | 1000159-NP | 18wt % amorphous silica (5µ) with 3 wt % erucamide | 1.028 | 2.0 | Ampacet |
| SLIP 1 | MB50-802 | 20-40 wt % silica 50 wt % UHMW Polysiloxane in 10-30 wt % LDPE | \1.03 | 8.0 | Dow Corning |
| SLIP 2 | A-2533 | 5 wt % Erucamide in 95 wt % LLDPE | 0.92 | 2.4 | Ampacet |
| SLIP 3 | A-2142 | 100 wt % zinc stearate lubricant | --- | --- | Chemtura Corp |
| EVA 2 | ESCORENE^{®} LD 761.36 | Ethylene/vinyl acetate copolymer (26.7%VA) | 0.950 | 5.75 | Exxon Mobil |

| | | | | | |
|---|---|---|---|---|---|
| -particle size designation (in microns, µ) is average particle size determined per ASTM D4664 *with additives: 0.9-1.0% calcium phosphate and silicon dioxide | | | | | |

Table 2, below, provides the structure and composition of Film No. 1, including the identities of the polymers used in the various layers, the arrangement of the layers, and the thickness of the layers. Film No. 1 was a prior art film produced in accordance with the process illustrated in FIG 2, described above. The solid state orientation of the tape was carried out at about 3.6:1 in the machine direction and 3.6 :1 in the transverse direction, for a total orientation ratio of about 13:1. The process included the addition of corn starch dust to the inside of the tape immediately upon extrusion, as well as the addition of corn starch dust to the outside of the lay-flat heat shrinkable film, as in the above description of FIG 2.

**Table 2**

| Layer | Film Tubing No. 1 (prior art dusted film tubing) | | | | | | |
|---|---|---|---|---|---|---|---|
| function | Seal | 1^{st} Bulk | 1^{st} Tie | Barrier | 2^{nd} Tie | 2^{nd} Bulk | Abuse |
| ComPosition | 80% SSPE1 | 70 VLDPE1 | EVA2 | PVDC1 | EVA4 | 70 VLDPE1 | 80 SSPE2 |
| | 20% LLDPE2 | 30 EVA2 | | | | 30 EVA2 | 20 LLDPE3 |
| wt. % | 21.65 | 38.96 | 4.33 | 9.09 | 4.33 | 12.99 | 8.66 |
| Thickness | 10.922 µm (0.43 mil) | 19.812 (0.78 mil) | 2.286 (.09 mil) | 4.572 (.18 mil) | 2.286 µm (.09 mil) | 6.604 µm 0.26 mil | 4.318 µm (0.17 mil) |

### Film Tubing No. 2 through Film Tubing No. 11 (Dustless Film Tubings)

Various additive compositions (ACs) were also prepared for use in the seal layer and/or the outer abuse layer, in order to eliminate the need for the use of dust, while maintaining the slip and antiblock properties of the film with dust thereon, as follows:

**Table 3**

| Additive Compositions for Dustless Film Tubings | | | | | |
|---|---|---|---|---|---|
| Inside Layer Composition | AC#1 | AC#2 | AC#3 | AC#4 | AC#5 |
| AB1 | | | 0.33 | | |
| AB2 | | | 1.25 | | |
| AB3 | | | | 12 | |
| AB4 | | | | | 3.0 |
| AB9 | 0.7 | | | | |
| WAX1 | 3.29 | 5 | 3.50 | | 3.5 |
| WAX2 | 1.35 | | 4.50 | | 3.5 |
| SLIP2 | | | | 8 | |
| SLIP3 | 1.10 | | | | |
| AB&S2 | 0.66 | | | | |
| AB&S3 | 1.4 | | | | |
| LLDPE2 | 91.5 | 95 | 90.42 | 20 | 90 |
| SSPE1 | | | | 60 | |
| Total (wt %) | 100 | 100 | 100 | 100 | 100 |

Heat-shrinkable Film Tubings No. 2 through No. 11 were also prepared by the process illustrated in FIG 2, except that (i) no dust of any type was added either to the inside of the tape immediately upon extrusion, and (ii) no dust of any type was added to the outside of the resulting heat-shrinkable film tubing, even before or during conversion to heat-shrinkable packaging articles. Film Tubings No. 2 through No. 11 were prepared by conducting the solid state orientation of the tape at 3.6X in the machine direction and 3.6X in the transverse direction, for a total orientation ratio of about 13: 1. Heat-shrinkable Film Tubing No. 2 through Film Tubing No. 11 were dust-free heat-shrinkable films which were provided with additives to the inside layer and/or outside layer in an effort to provide the resulting tubing and bags with the desired anti-blocking character (e.g., openability) and slip character, i.e., in an effort to provide the resulting heat-shrinkable film tubings and resulting packaging articles with anti-block and slip character comparable to bags with dust on the inside surface thereof and with dust on the outside surface thereof.

**Table 4**

| Film Layer | Film Tubing No. 2 | | | | | | |
|---|---|---|---|---|---|---|---|
| function | Seal | 1^{st} Bulk | 1^{st} Tie | Barrier | 2^{nd} Tie | 2^{nd} Bulk | Abuse |
| compos. | 80% SSPE1 | 70 VLDPE1 | EVA2 | PVDC1 | EVA4 | 70 VLDPE1 | 80 SSPE2 |
| | 20% AC#1 | 30 EVA2 | | | | | 20 LLDPE3 |
| | | | | | | 30 EVA2 | |
| Thickness | 127 µm (5 mils) | 228.6 µm (9 mils) | 25.4 µm (1 mil) | 50.8 µm (2 mils) | 25.4 µm (1 mil) | 76.2 µm (3 mils) | 2 mils (50.8 µm) |

Film Tubing No. 2 opened before solid state orientation, but would not open after solid state orientation, because the inside layer of the oriented film tubing blocked to itself.

**Table 5**

| Layer | Film Tubing No. 3 | | | | | | |
|---|---|---|---|---|---|---|---|
| function | Seal | 1^{st} Bulk | 1^{st} Tie | Barrier | 2^{nd} Tie | 2^{nd} Bulk | Abuse |
| compos. | 60% SSPE1 | 70 VLDPE1 | EVA2 | PVDC1 | EVA4 | 70 VLDPE1 | 80 SSPE2 |
| | 38% AC #2 | 30 EVA2 | | | | | 20 LLDPE3 |
| | 2% AB&S 1 | | | | | 30 EVA2 | |
| Thickness | 127 µm (5 mils) | 355.6 µm (14 mils) | 25.4 µm (1 mil) | 50.8 µm (2 mils) | 25.4 µm (1 mil) | 76.2 µm) 3 mils | 50.8 µm (2 mils) |

Film Tubing No. 3 readily opened before solid state orientation, but would not open after solid state orientation, because the inside layer of the oriented film tubing blocked to itself. Thus, the reported layer thickness is of the layers of the layers of the unoriented tubing.

**Table 6**

| Layer | Film Tubing No. 4 | | | | | | |
|---|---|---|---|---|---|---|---|
| function | Seal | 1^{st} Bulk | 1^{st} Tie | Barrier | 2^{nd} Tie | 2^{nd} Bulk | Abuse |
| compos. | 80% SSPE1 | 70 VLDPE1 | EVA2 | PVDC1 | EVA4 | 70 VLDPE1 | 80 SSPE2 |
| | 20% AC#3 | 30 EVA2 | | | | 30 EVA2 | 20 LLDPE3 |
| Thickness | 10.922 µm (0.43) | 19.812 µm (0.78) | 2.286 µm (0.09) | 4.572 µm (0.18) | 2.286 µm (0.09) | 6.604 µm (0.26) | 4.318 µm (0.17) |

Film Tubing No. 4 opened both before solid state orientation and after solid state orientation. As the tubing could be opened after orientation (i.e., because the inside surface did not adhere to itself strongly enough to block), the reported layer thickness is of the layers of the heat-shrinkable film taken from the oriented film tubing.

**Table 7**

| Layer | Film Tubing No. 5 | | | | | | |
|---|---|---|---|---|---|---|---|
| function | Seal | 1^{st} Bulk | 1^{st} Tie | Barrier | 2^{nd} Tie | 2^{nd} Bulk | Abuse |
| compos. | 60% SSPE1 | 70 VLDPE1 | EVA2 | PVDC1 | EVA4 | 70 VLDPE1 | 80 SSPE2 |
| | 40% AC #4 | 30 EVA2 | | | | | 20 LLDPE3 |
| | | | | | | 30 EVA2 | |
| Targeted Thickness | 127 µm (5 mils) | 355.6 µm (14 mils) | 25.4 µm (1 mil) | 50.8 µm (2 mils) | 25.4 µm (1 mil) | 76.2 µm (3 mils) | 50.8 µm (2 mils) |

Film Tubing No. 5 blocked to such an extent that it would not open even before solid state orientation. As the tape tubing could not be opened even before solid state orientation (i.e., because the inside layer of the unoriented tape blocked to itself), the layer thickness numbers provided in Table 7 above are based on the rates of materials pumped through the annular die.

**Table 8**

| Layer | Film Tubing No. 6 | | | | | | |
|---|---|---|---|---|---|---|---|
| function | Seal | 1^{st} Bulk | 1^{st} Tie | Barrier | 2^{nd} Tie | 2^{nd} Bulk | Abuse |
| compos. | 73% SSPE2 | 70 VLDPE1 | EVA2 | PVDC1 | EVA4 | 70 VLDPE1 | 80 SSPE2 |
| | 26% AC#3 | 30 EVA2 | | | | 30 EVA2 | 20 LLDPE3 |
| | 1.33% AB&S1 | | | | | | |
| Thickness | 10.922 µm (0.43) | 19.812 µm (0.78) | 2.286 µm (0.09) | 4.572 µm (0.18) | 2.286 µm (0.09) | 6.604 µm (0.26) | 4.318 µm (0.17) |

As with Film Tubing No. 4, Film Tubing No.6 opened both before solid state orientation and after solid state orientation. As the tubing could be opened after orientation, the reported layer thickness is of the layers of the heat-shrinkable film taken from the oriented film tubing.

### Openability Results: Film Tubing No. 1 through No. 6

Data obtained from making Film No. 1 through Film No.6 resulted in the finding that the size and amount of antiblock particulates provided in the inside layer, as well as the presence and amount of both the slow and fast blooming release agents in the inside layer, resulted in both (i) tape openability before solid state orientation, so that the shrink film production process could be run to completion, and (ii) a heat-shrinkable film tubing which could be wound up on a roll while in lay-flat configuration, and thereafter unrolled and converted into packaging articles which were openable by an Openability Test. Considering the results above for Film Tubings No. 1 through No. 6, only Film Tubing No. 4 and Film Tubing No. 6 were prepared in a manner which produced both (i) tape openability before solid state orientation and (ii) a heat-shrinkable film tubing which could thereafter be converted into openable packaging articles.

As all process factors remained substantially constant except the composition of the additives in the inside heat seal layer of the tubing, it is believed that the compositional differences between the various heat seal layers was responsible for the differences in openability data between Film Tubing Nos. 4 and 6 versus Film Tubing Nos. 2, 3, and 5. More particularly, the type and amount of antiblock and release agents was sufficient for Film Tubing No. 2 to open before solid state orientation, but not after solid state orientation. The fact that Film Tubing No. 3 opened before solid state orientation but not after solid state orientation confirmed that, relative to Film Tubing No. 2, roughly tripling the wt % and size (µ) of the antiblock particulates (Film Tubing No. 3 vs. No. 2) in combination with halving fast- bloom release agent but roughly doubling the slow-bloom release agent (Film Tubing No. 3 vs. No. 2) did not provide the tubing with a combination of type and amount of antiblock particulates and release agents to produce a different openability result. In Film Tubing No. 5, elevating the amount of antiblock particulates even higher but eliminating the fast bloom release agent proved to prevent even the openability of the tubular tape, establishing the importance of the fast-bloom release agent in the inside layer of the tubing.

In contrast, Film Tubing No. 4 was openable at all stages (i.e., before orientation as well as after orientation and windup). Film Tubing No. 4 was provided with relatively high levels of both fast-bloom and slow-bloom release agents (9000 ppm and 7000 ppm, respectively), but with 2500 ppm antiblocking particulates having a size of 3.5µ. This combination of 3.5µ particle size at 2500 ppm together with the 9000 and 7000 ppm of the release agents provided improved openability over the somewhat different combination of additives present in Film Tubing Nos. 2 and 3.

Relative to the all-stage openability obtained with Film Tubing No. 4, the complete lack of openability for Film Tubing No. 5 revealed that eliminating the slow-bloom release agent in combination with decreasing the fast-bloom release agent to 1000 ppm while simultaneously increasing the antiblock to 9,600 ppm (from 2500 ppm for Film Tubing No. 4) and increasing the particle size from 3.5µ (Film Tubing No. 4) to 5µ (Film Tubing No. 5), demonstrated the need for a substantial quantity of the fast-bloom release agent. Comparing the two-stage openability of Film No. 4 against the one-stage openability of Film Tubing No. 2 and No 3 further confirms the need for a substantial quantity of the fast-bloom release agent.

The openability data for Film No. 4 demonstrates that relatively high levels of both slow and fast blooming release agents in combination with a moderate amount of relatively large (3.5µ) antiblocking particulates produced openability at both stages in the making of a heat-shrinkable film tubing. Relative to Film Tubing No. 4, Film Tubing No. 6 was provided with even higher levels of both fast and slow blooming release agents, and about the same wt % of 3.5µ antiblock particulates plus about an equal wt % of 15µ particulates, with the openability of Film Tubing No. 6 confirming that the presence of even more release agents and antiblock particulates also generate the two-stage openability as found previously for Film Tubing No. 4. However, the haze level for Film Tubing No. 6 was significantly higher than the haze level measured for Film Tubing No. 4. See Table 14, below.

Further work to develop a two-stage openable tubing was carried out by making Film Tubing Nos. 7 through 11, as set forth below. Each of Film Tubing No. 7 through 11 varied only in the additive types and/or amounts provided to the inside heat seal layer of the film. Tables 9-13, below, provide the layer arrangement, layer composition, and layer thickness for each of Film Tubing Nos. 7 through 11.

**Table 9**

| | Film No. 7 | | | | | | |
|---|---|---|---|---|---|---|---|
| function | Seal | 1^{st} Bulk | 1^{st} Tie | Barrier | 2^{nd} Tie | 2^{nd} Bulk | Abuse |
| compos. | 72.5% SSPE1 | 70 VLDPE1 | EVA2 | PVDC1 | EVA3 | 70 VLDPE1 | 80 SSPE2 |
| | 20% AB&S1 | 30 EVA1 | | | | 30 EVA1 | 20 LLDPE1 |
| | 7.5% AB3 | | | | | | |
| Thickness | 10.922 µm (0.43 mil) | 19.812 µm (0.78 mil) | 2.286 µm (0.09 mil) | 4.572 µm (0.18 mil) | 2.286 µm (0.09 mil) | 6.604 µm (0.26 mil) | 4.318 µm (0.17 mil) |

**Table 10**

| | Film No. 8 | | | | | | |
|---|---|---|---|---|---|---|---|
| function | Seal | 1^{st} Bulk | 1^{st} Tie | Barrier | 2^{nd} Tie | 2^{nd} Bulk | Abuse |
| compos. | 74% SSPE1 | 70 VLDPE1 | EVA2 | PVDC1 | EVA3 | 70 VLDPE1 | 80 SSPE2 |
| | 20% AB&S1 | 30 EVA1 | | | | 30 EVA1 | 20 LLDPE1 |
| | 6% AB3 | | | | | | |
| Thickness | 10.922 µm (0.43 mil) | 19.812 µm (0.78 mil) | 2.286 µm (0.09 mil) | 4.572 µm (0.18 mil) | 2.286 µm (0.09 mil) | 6.604 µm (0.26 mil) | 4.318 µm (0.17 mil) |

**Table 11**

| | Film No. 9 | | | | | | |
|---|---|---|---|---|---|---|---|
| function | Seal | 1^{st} Bulk | 1^{st} Tie | Barrier | 2^{nd} Tie | 2^{nd} Bulk | Abuse |
| compos. | 80% SSPE1 | 70 VLDPE1 | EVA2 | PVDC1 | EVA3 | 70 VLDPE1 | 80 SSPE2 |
| | 16% AB&S1 | 30 EVA1 | | | | 30 EVA1 | 20 LLDPE1 |
| | 4% AB3 | | | | | | |
| Thickness | 10.922 µm (0.43 mil) | 19.812 µm (0.78 mil) | 2.286 µm (0.09 mil) | 4.572 µm (0.18 mil) | 2.286 µm (0.09 mil) | 6.604 µm (0.26 mil) | 4.318 µm (0.17 mil) |

**Table 12**

| | Film No. 10 | | | | | | |
|---|---|---|---|---|---|---|---|
| function | Seal | 1^{st} Bulk | 1^{st} Tie | Barrier | 2^{nd} Tie | 2^{nd} Bulk | Abuse |
| compos. | 80% SSPE1 | 70 VLDPE1 | EVA2 | PVDC1 | EVA3 | 70 VLDPE1 | 80 SSPE2 |
| | 18% AB&S1 | 30 EVA1 | | | | 30 EVA1 | 20 LLDPE1 |
| | 2% AB3 | | | | | | |
| Thickness | 10.922 µm (0.43 mil) | 19.812 µm (0.78 mil) | 2.286 µm (0.09 mil) | 4.572 µm (0.18 mil) | 2.286 µm (0.09 mil) | 6.604 µm (0.26 mil) | 4.318 µm (0.17 mil) |

**Table 13**

| | Film No. 11 | | | | | | |
|---|---|---|---|---|---|---|---|
| function | Seal | 1^{st} Bulk | 1^{st} Tie | Barrier | 2^{nd} Tie | 2^{nd} Bulk | Abuse |
| compos. | 80% SSPE1 | 70 VLDPE1 | EVA2 | PVDC1 | EVA3 | 70 VLDPE1 | 80 SSPE2 |
| | 19% AB&S1 | 30 EVA1 | | | | 30 EVA1 | 20 LLDPE1 |
| | 1% AB3 | | | | | | |
| Thickness | 10.922 µm (0.43 mil) | 19.812 µm (0.78 mil) | 2.286 µm (0.09 mil) | 4.572 µm (0.18 mil) | 2.286 µm (0.09 mil) | 6.604 µm (0.26 mil) | 4.318 µm (0.17 mil) |

The amounts of the fast-blooming release agent and the slow-blooming release agent were relatively flat for the heat seal layers of each of Film Tubing No. 7 through No. 11. More particularly, the amount of the fast-blooming release agent in the inside layer ranged from 8,100 ppm to 9,000 ppm, while the slow-blooming release agent ranged from 5,600 ppm to 7,000 ppm. In contrast, the amount of particulate antiblock was varied from a high of 17,500 ppm to a low of 4,375 ppm. The haze data for Film Tubing No. 7 through No. 11 revealed that a lower amount of antiblocking particulates produced a film exhibiting lower haze. Low haze is desirable as the film appears more transparent the lower the haze. See Table 14, below.

Table 14 further includes results for additional Film Tubing Nos. 12 through 17. In this set of examples, the same base film as used for Film Tubing Nos. 2 through 11 was again provided with different amounts of release agents and antiblock particulates. Although each of Film Tubing No. 12 through 17 exhibited two-stage openability, Film Tubing No. 16 and 17 exhibited "mild resistance" to opening, while Film Tubing Nos. 12 through 15 exhibited "substantial resistance" to opening. For Film Tubing Nos. 2 through 17, openability characterization was a subjective description based on a manually handling and blowing into the wound up tubing of the heat-shrinkable film. It was not carried out in accordance with the Openability Test described hereinbelow.

**Table 14: Inside Layer Results**

| **Film** No. | Inside Layer composition | Primary et/α-olefin (g/cm³) | Inside WAX 2 (ppm) Fast bloom | Inside WAX 1 (ppm) Slow Bloom | Large Antiblock (ppm) (5µ -15µ) | Inside layer AB2 (ppm) (3.5 µ) | Inside layer AB1 (ppm) (0.7 µ) | Total Wax (ppm) | Total Antiblock ≥3,5µ (ppm) | Opened before solid state orientation | Packaging Article Openability | Haze (%) | Haze Perform. | COF Instantane ous Inside-toinside | COF Peak Value inside to inside | Gloss (%) |
|---|---|---|---|---|---|---|---|---|---|---|---|---|---|---|---|---|
| 2 (C) | 80% SSPE1 | 0.900 | 3350 | 8,800 | 650 (5µ) | 1400 (3µ) | 0 | 20,000 | 5000 | 1^{st}: YES | 1^{st}: YES | 1.32 | Good | - - | - - | 95 |
| | 20% AC#1 | | | | | | | | | 2^{nd}: YES | 2^{nd}: NO | | | | | |
| 3 (C) | 60% SSPE1 | 0.900 | 1,000 | 19,000 | 5,000 (15µ) | 0 | 0 | 20,000 | 5000 | YES | NO | - - | - - | - - | - - | - - |
| | 38% AC#2 | | | | | | | | | | | | | | | |
| | 2%AB&Sl | | | | | | | | | | | | | | | |
| 4 (W) | 80% SSPE1 | 0.900 | 9,000 | 7000 | 0 | 2500 | 660 | 16,000 | 2500 | YES | YES | 6.12 | good | - - | - - | 96 |
| | 20% AC#3 | | | | | | | | | | | | | | | |
| 5 (C) | 60% SSPE1 | 0.900 | 1,600 | 0 | 9600 (5µ) | 0 | 0 | 1.600 | 9600 | NO | NO | - - | - - | - - | - - | -- |
| | 40% AC#4 | | | | | | | | | | | | | | | |
| 6 (W) | 73% SSPE1 | 0.900 | 12,365 | 9,100 | 3325 (15µ) | 3250 | 860 | 21,465 | 6575 | YES | YES | 13.6 | poor | - - | - - | 80.6 |
| | 26% AB&S1 | | | | | | | | | | | | | | | |
| | 1.33%AB3 | | | | | | | | | | | | | | | |
| 7 (W) | 72.5% SSPE1 | 0.900 | 8991 | 6993 | 15040 | 2497.5 | 659.34 | 15984 | 18197 | YES | YES | 11.6 | poor | 0.285 | - - | 77 |
| | 20% AB&S | | | | | | | | | | | | | | | |
| | 7.5%AB3 | | | | | | | | | | | | | | | |
| 8 (W) | 74% SSPE1 | 0.900 | 9000 | 7000 | 12000 | 2500 | 660 | 16000 | 15160 | YES | YES | 11.4 | poor | 0.235 | - - | 77 |
| | 20% AB&S1 | | | | | | | | | | | | | | | |
| | 6%AB3 | | | | | | | | | | | | | | | |
| 9 (W) | 80% SSPE1 | 0.900 | 7200 | 5600 | 8000 | 2000 | 528 | 12800 | 10528 | YES | YES | 7.66 | fair | 0.228 | - - | 83 |
| | 16% AB&S1 | | | | | | | | | | | | | | | |
| | 4%AB3 | | | | | | | | | | | 8.46 | | | | |
| 10 (W) | 80% SSPE1 | 0.900 | 8100 | 6300 | 4000 | 2250 | 594 | 14400 | 6844 | YES | YES | 7.06 | good | 0.299 | - - | 72 |
| | 18% AB&S1 | | | | | | | | | | | | | | | |
| | 2%AB3 | | | | | | | | | | | | | | | |
| 11 (W) | 80% SSPE1 | 0.900 | 8550 | 6650 | 2000 | 2375 | 627 | 15200 | 5002 | YES | YES | 5.47 | good | 0.244 | - - | 80 |
| | 19% AB&S1 | | | | | | | | | | | | | | | |
| | 1%AB3 | | | | | | | | | | | | | | | |
| 12 | 80% SSPE1 + additives shown | 0.900 | 1500 | 4500 | 500 | 3000 | 0 | 6000 | 3500 | YES | YES** | 5.48 | good | 1 | 1.99 | - - |
| 13 | 80% SSPE1 + additives shown | 0.900 | 1500 | 6000 | 500 | 4000 | 0 | 7500 | 4500 | YES | YES** | 4.17 | good | 0.403 | 0.977 | - - |
| 14 | 80% SSPE1 + additives shown | 0.900 | 6000 | 4500 | 1500 | 3000 | 0 | 10500 | 4500 | YES | YES** | 8.05 | good | 1.640 | 1.99 | - - |
| 15 | 80% SSPE1 + additives shown | 0.900 | 1500 | 6000 | 1500 | 3000 | 0 | 7500 | 4500 | YES | YES** | 6.20 | good | 0.255 | 0.491 | - - |
| 16 | 80% SSPE1 + additives shown | 0.900 | 6000 | 4500 | 1500 | 3000 | 0 | 10500 | 4500 | YES | YES* | 8.12 | good | 0.425 | 0.766 | - - |
| 17 | 80% SSPE1 + additives shown | 0.900 | 6000 | 6000 | 1500 | 4000 | 0 | 12000 | 5500 | YES | YES* | 6.88 | good | 0.196 | 0.385 | - - |

| | | | | | | | | | | | | | | | | |
|---|---|---|---|---|---|---|---|---|---|---|---|---|---|---|---|---|
| *Opened: tubing initially opened, but with mild resistance to opening, i.e., not as readily as samples labeled as simply "opened" **Opened: tubing initially opened, but with substantial resistance to opening | | | | | | | | | | | | | | | | |

Additional film tubings were prepared in an effort to discover what additive(s) were needed in the outside layer of the tubing to provide performance characteristics at least substantially equivalent to the use of dust on the outside of the film tubing. Dust on the outside of the film tubing enhances the release properties of the film (i.e., so that the film does not adhere to itself during unrolling and during handling of stacked bags and taped bags) and lowers the coefficient of friction of the outside surface of the film so that the film tubing, and packaging articles made therefrom, slide freely relative to equipment surfaces, etc., during further film processing, including during conversion of the tubing to packaging articles and subsequent processing of the packaging articles.

Table 15, below, provides composition and performance data pertaining to Film Tubing Nos. 19-31, each of which had an outside layer which was extruded with one or more slip or antiblock additives. Although no dust was added to the outside surface of any of Film Tubings 19-31, dust was added to the inside of Tubing Nos. 19-31 during their manufacture.

Among Tubing Nos. 19-31, haze ranged from a low of about 5% to a high of about 15%, with most of the films exhibiting from 6% to 11% haze. Gloss ranged from a low of about 45% to a high of about 78%.

**Table 15**

| Film Tubing No. | Composition of Tubing Outside Layer | Slip Agent (ppm) | Antiblock (ppm) in outside layer | Blend Density (g/cm³) | Shrink @185F (L) | Shrink @185F (T) | COF (instan t) | COF (Peak) | Gloss (%) | Haze (%) | Comments |
|---|---|---|---|---|---|---|---|---|---|---|---|
| **18A** | SSPES 80%/LLDPE319%/FP 1% | 200 fluoropolymer | 0 | 0.906 | 47.5 | 50 | 1.485 | Undefined | 72.1 | 3.51 | |
| 19 | SSPES 85%/SSPE6 11%/SLIP1 2%/AB3 2% | 10,000 polysiloxane | 4000 5µ silica | 0.910 | 47.5 | 50.5 | Undefined | Undefined | 73.05 | 7.85 | Ran well |
| 20 | SSPE5 85%/ SSPE6 12%/AB&S4 3% | 900 Erucamide | 5400 5µ silica | 0.909 | 44.5 | 51 | 0.281 | 0.7575 | 76.7 | 6.485 | |
| 21 | SSPES 80%/ SSPE4 16%/SLIP1 2%/AB3 2% | 10,000 polysiloxane | 4000 5µ silica | 0.911 | 46.5 | 52.5 | 0.993 | DIV/0! | 63.35 | 7.385 | |
| **18B** | SSPES 80%/ LLDPE3 19%/FP 1% | 200 fluoropolymer | 0 | 0.906 | 47.5 | 50.5 | 1.48 | DIV/0! | 68.5 | 5.05 | |
| 22 | Westlake 77523 (loaded antiblock/slip) 80%/SSPE7 20% | 920 | 14,400 | 0.908 | 45 | 50.5 | 0.396 | 1.295 | 76.1 | 7.84 | |
| 23 | LLDPE4 70% /Westlake sc74877 20% /SSPE3 8%/SLIP1 2% | 10,000 Polysiloxane | 1400 | 0.910 | 44.5 | 50.5 | 0.2525 | 0.7815 | 68.65 | 4.595 | |
| **18C** | SSPES 80%/ LLDPE3 19%/ FP 1% | 200 fluoropolymer | 0 | 0.906 | 44 | 51 | 0.504 | 0.8455 | 77.9 | 3.725 | |
| 24 | SSPE4 80% / SSPE3 17% /AB3 3% | 0 | 6000 5µ silica | 0.908 | 44 | 51 | 0.2185 | 0.5985 | 75.65 | 5.23 | |
| 25 | SSPE7 64%/ssPEC2 33% /AB3 3% | 0 | 6000 5µ silica | 0.906 | 45.5 | 53.5 | 0.107 | 0.208 | 42.45 | 14.85 | |
| 26 | SSPE4 67%/ ssPEC1 30%/AB3 3% | 0 | 6000 5µ silica | 0.909 | 44.5 | 52 | 0.1755 | 0.633 | 75.8 | 5.905 | |
| **18D** | SSPES 80%/ LLDPE3 19%/ FP 1% | 200 fluoropolymer | 0 | 0.906 | 46 | 51.5 | 0.453 | 0.937 | 81.8 | 3.635 | |
| 27 | znPEC 70% / SSPE5 27% /AB3 3% | 0 | 6000 5µ silica | 0.905 | 47 | 51.5 | 0.1475 | 0.292 | 65.5 | 8.115 | |
| 28 | znPEC 80% /Westlake SC74877 17% / AB3 3% | 0 | 4000 5µ silica + 1190 add'l | 0.906 | 43.5 | 48.5 | 0.1735 | 0.2685 | 72.2 | 8.785 | Bad curl |
| 29 | znPEC 90% /Westlake SC74877 7% /AB3 3% | 0 | 4000 5µ silica+ 1190 add'l | 0.905 | 39.5 | 49.5 | 0.1725 | 0.3325 | 65.05 | 9.84 | Bad curl |
| **18E** | SSPES 80%/ LLDPE3 19%/ FP 1% | 200 fluoropolymer | 0 | 0.906 | 47 | 53 | 0.604 | 1.121 | 86.8 | 3.58 | Strange reading (rev. values vs pilot run) |
| 30 | SSPES 80%/ LLDPE3 16%/AB&S4 2%/SLIP1 2% | 10,000 Polysiloxane 600 erucamide | 3600 5µ silica | 0.912 | 44.5 | 50.5 | 0.569 | 0.714 | 72.25 | 8.2 | Haze, bags came apart, high static |
| 31 | SSPE4 61%/ ssPEC2 35%/SLIP1 2%/AB3 2% | 10,000 polysiloxane | 4000 5µ silica | 0.903 | 44.5 | 52 | 0.2565 | 0.4515 | 49.95 | 10.9 | |
| 32 | SSPE7 50% / ssPEC2 50% | 0 | 0 | 0.895 | 46.5 | 53 | 0.0985 | 0.251 | 23.7 | 26.4 | |

Film Tubing Nos. 33 through 41 were prepared entirely free of dust on either the inside of the tubing or the outside of the tubing. In each of these film tubings, a release agent and/or antiblock particulates were blended into each of the inside layer of the tubing and the outside layer of the tubing. The multilayer structures of Film Tubing Nos. 33-41 are provided in Table 16 through Table 24, below. Tables 16-24 include the composition and thickness of each layer.

| Table 16 Film Tubing No. 33 | | | | | | | |
|---|---|---|---|---|---|---|---|
| 80 SSPE1 | 64 VLDPE2 | EVA2 | EVA4 | PVDC1 | EVA4 | 64 VLDPE3 | 67 SSPE1 |
| 20 AC#5 | 30 EVA2 | | | | | 29.9 EVA2 | 30ssPEC1 |
| | 6 SSPE3 | | | | | 6.1 SSPE3 | 3 AB3 |
| 10.922 µm (0.43) | 19.812 µm (0.78) | 2.286 µm (0.09) | 1.524 µm (0.06) | 5.334 µm (0.21) | 1.778 µm (0.07) | 6.604 µm (0.26) | 4.318 µm (0.17) |
| INSIDE | | | | | | | OUTSIDE |

| Table 17 Film Tubing No. 34 | | | | | | | |
|---|---|---|---|---|---|---|---|
| 80 SSPE1 | 64 VLDPE2 | EVA2 | EVA4 | PVDC1 | EVA4 | 64 VLDPE3 | 80 SSPE1 |
| 20 AC#5 | 30 EVA2 | | | | | 29.9 EVA2 | 17 SSPE3 |
| | 6 SSPE3 | | | | | 6.1 SSPE3 | 3 AB3 |
| 10.922 µm (0.43) | 19.812 µm (0.78) | 2.286 µm (0.09) | 1.524 µm (0.06) | 5.334 µm (0.21) | 1.778 µm (0.07) | 6.604 µm (0.26) | 4.318 µm (0.17) |
| INSIDE | | | | | | | OUTSIDE |

| Table 18 Film Tubing No. 35 | | | | | | | |
|---|---|---|---|---|---|---|---|
| 80 SSPE1 | 64 VLDPE2 | EVA2 | EVA4 | PVDC1 | EVA4 | 64 VLDPE3 | 68.5 SSPE1 |
| 20 AC#5 | 30 EVA2 | | | | | 29.9 EVA2 | 30 ssPEC1 |
| | 6 SSPE3 | | | | | 6.1 SSPE3 | 3 AB5 |
| 10.668 µm (0.42) | 19.05 µm (0.75) | 2.032 µm (0.08) | 1.524 µm (0.06) | 5.08 µm (0.20) | 1.778 µm (0.07) | 6.35 µm (0.25) | 4.318 µm (0.17) |
| INSIDE | | | | | | | OUTSIDE |

| Table 19 Film Tubing No. 36 | | | | | | | |
|---|---|---|---|---|---|---|---|
| 80 SSPE1 | 64 VLDPE2 | EVA2 | EVA4 | PVDC1 | EVA4 | 64 VLDPE3 | 81.5 SSPE1 |
| 20 AC#5 | 30 EVA2 | | | | | 29.9 EVA2 | |
| | 6 SSPE3 | | | | | 6.1 SSPE3 | 17 SSPE3 |
| | | | | | | | 1.5 AB5 |
| 10.668 µm (0.42) | 19.05 µm (0.75) | 2.032 µm (0.08) | 1.524 µm (0.06) | 5.08 µm (0.20) | 1.778 µm (0.07) | 6.35 µm (0.25) | 4.318 µm (0.17) |
| INSIDE | | | | | | | OUTSIDE |

| Table 20 Film Tubing No. 37 | | | | | | | |
|---|---|---|---|---|---|---|---|
| 80 SSPE1 | 64 VLDPE2 | EVA2 | EVA4 | PVDC1 | EVA4 | 64 VLDPE3 | 67 SSPE1 |
| 20 AC#5 | 30 EVA2 | | | | | 29.9 EVA2 | 30 ssPEC1 |
| | 6 SSPE3 | | | | | 6.1 SSPE3 | 1.5 AB5 |
| | | | | | | | 1.5 SLIP1 |
| 10.668 µm (0.42) | 19.05 µm (0.75) | 2.032 µm (0.08) | 1.524 µm (0.06) | 5.08 µm (0.20) | 1.778 µm (0.07) | 6.35 µm (0.25) | 4.318 µm (0.17) |
| INSIDE | | | | | | | OUTSIDE |

| Table 21 Film Tubing No. 38 | | | | | | | |
|---|---|---|---|---|---|---|---|
| 80 SSPE1 | 64 VLDPE2 | EVA2 | EVA4 | PVDC1 | EVA4 | 64 VLDPE3 | 80 SSPE1 |
| 20 AC#5 | 30 EVA2 | | | | | 29.9 EVA2 | 17 SSPE3 |
| | 6 SSPE3 | | | | | 6.1 SSPE3 | 1.5 AB5 |
| | | | | | | | 1.5 SLIP1 |
| 10.668 µm (0.42) | 19.05 µm (0.75) | 2.032 µm (0.08) | 1.524 µm (0.06) | 5.08 µm (0.20) | 1.778 µm (0.07) | 6.35 µm (0.25) | 4.318 µm (0.17) |
| INSIDE | | | | | | | OUTSIDE |

| Table 22 Film Tubing No. 39 | | | | | | | |
|---|---|---|---|---|---|---|---|
| 80 SSPE1 | 64 VLDPE2 | EVA2 | EVA4 | PVDC1 | EVA4 | 64 VLDPE3 | 66.5 SSPE1 |
| 20 AC#5 | 30 EVA2 | | | | | 29.9 EVA2 | 30 ssPEC1 |
| | 6 SSPE3 | | | | | 6.1 SSPE3 | 1.5 AB5 |
| | | | | | | | 1.0 SLIP1 |
| | | | | | | | 1.0 FP |
| 10.668 µm (0.42) | 19.05 µm (0.75) | 2.032 µm (0.08) | 1.524 µm (0.06) | 5.08 µm (0.20) | 1.778 µm (0.07) | 6.35 µm (0.25) | 4.318 µm (0.17) |
| INSIDE | | | | | | | OUTSIDE |

| Table 23 Film Tubing No. 40 | | | | | | | |
|---|---|---|---|---|---|---|---|
| 80 SSPE1 | 64 VLDPE2 | EVA2 | EVA4 | PVDC1 | EVA4 | 64 VLDPE3 | 79.5 SSPE1 |
| 20 AC#5 | 30 EVA2 | | | | | 29.9 EVA2 | 17 SSPE3 |
| | 6 SSPE3 | | | | | 6.1 SSPE3 | 1.5 AB5 |
| | | | | | | | 1.0% SLIP1 |
| | | | | | | | 1.0% FP |
| 10.668 µm (0.42) | 19.05 µm (0.75) | 2.032 µm (0.08) | 1.524 µm (0.06) | 5.08 µm (0.20) | 1.778 µm (0.07) | 6.35 µm (0.25) | 4.318 µm (0.17) |
| INSIDE | | | | | | | OUTSIDE |

| Table 24 Film Tubing No. 41 | | | | | | | |
|---|---|---|---|---|---|---|---|
| 80 SSPE1 | 64 VLDPE2 | EVA2 | EVA4 | PVDC1 | EVA4 | 64 VLDPE3 | 79.5 SSPE5 |
| 20 AC#5 | 30 EVA2 | | | | | 29.9 EVA2 | 17 LLDPE3 |
| | 6 SSPE3 | | | | | 6.1 SSPE3 | 1.5 AB5 |
| | | | | | | | 1.0% SLIP1 |
| | | | | | | | 1.0% FP |
| 10.668 µm (0.42) | 19.05 µm (0.75) | 2.032 µm (0.08) | 1.524 µm (0.06) | 5.08 µm (0.20) | 1.778 µm (0.07) | 6.35 µm (0.25) | 4.318 µm (0.17) |
| INSIDE | | | | | | | OUTSIDE |

In Film Tubing Nos. 33-41, each of the inside layers contained 20 wt % AC#5, which provided the inside layer with 7000 ppm fast-blooming release agent (erucamide), 7000 ppm slow-blooming release agent (bis-stearamide) and 6000 ppm of 5µ silica antiblock particulates. This blend was selected as providing two-stage openability without increasing haze to an undesirable level.

Film Tubing No. 35 and Film Tubing No. 36 exhibited tack together at converting and minor tack at loading. Film Tubing No. 37 and Film Tubing No. 38 provided zero tack/free hanging bags at converting and no rainbowing at hand loading. However, Film Tubing Nos. 37 and 38 had higher haze and lower gloss than Film Tubing Nos 35 and 36.

Table 25, below, provides a summary of the composition and various results obtained for Film Tubing Nos. 33-41. The haze values were affected by both the inside layer and the outside layer. The gloss and coefficient of friction values were determined by the characteristics of the outside layer alone. Low haze and high gloss are a desirable combination of properties. The results in Table 25 show the effects on haze and gloss and coefficient of friction as a function of the combination of slip and antiblock present in the outside and inside layers of Film Nos. 33-41, as well as for films A through H.

Additional Film Tubings Nos. 42 through 49 were prepared in the same manner as Film Tubing Nos. 33-41, except (i) dust was provided on the inside of the tubing during manufacture, and (ii) the composition of the outside layer was changed. The composition of the outside layer of the tubing for Film Tubing Nos. 42-49, and the gloss, haze, and other performance characteristics, are also provided in Table 25.

**Table 25**

| Film No. | Dustless Outside / Dustless Inside | Composition of Tubing Outside Layer | Slip agents: uhmw polysiloxane / fluoropolymer (ppm) | Silica Antiblock (ppm) In outside layer | Main et/α-olefin density (g/cm³) | Shrink @195F (L) | Shrink @195F (T) | Outside surface COF (instant) | Outside surface COF (Peak) | Haze (%) | Gloss (%) | Clarity |
|---|---|---|---|---|---|---|---|---|---|---|---|---|
| 33 | yes/yes | 67% SSPE4 / 30% ssPEC1 / 3% AB3 | 0 / 0 | 6000 5µ silica | 0.912 | | | Blocked | Blocked | | | |
| 34 | yes/yes | 80% SSPE4 / 17% SSPE3 / 3% AB3 | 0 / 0 | 6000 5µ silica | 0.912 | | | Blocked | Blocked | | | |
| 35 | yes/yes | 68.5% SSPE4 / 30% ssPEC1 / AB5 1.5% | 0 / 0 | 10,500 9µ silica | 0.912 | 46 | 51 | 0.370 | 0.918 | 7.40 | 81.7 81.6 | 15.0 |
| 36 | yes/yes | 81.5% SSPE4 / 18.5% SSPE3 / AB 5 1.5% | 0 / 0 | 10,500 9µ silica | 0.912 | 46 | 52 | 0.273 | 0.50 | 14.9 | 73.5 | 5.6 |
| 37 | yes/yes | 67% SSPE4 / 30% ssPEC1 / AB5 1.5% / SLIP1 1.5% | 7500 / 0 | 10,500 9µ silica 4,500 add'l silica | 0.912 | 45 | 52 | 0.294 | 0.436 | 25.4 | 68.2 | 4.8 |
| 38 | yes/yes | 80% SSPE4 / SSPE3 / AB5 1.5% / SLIP1 1.5% | 7500 / 0 | 10,500 9µ silica 4,500 add'l silica | 0.912 | 44 | 50 | 0.354 | 0.494 | 17.6 | 69.0 | 4.7 |
| 39 | yes/yes | 66.5% SSPE4 / 30% ssPEC1 /AB5 1.5% /SLIP1 1% / FP1% | 5000 / 200 | 10,500 9µ silica 3,000 add'l silica | 0.912 | 44 | 52 | 0.151 | 0.306 | 14 | 70.2 | 8.2 |
| 40 | yes/yes | 79.5% SSPE4 / SSPE3 / AB5 1.5% / SLIP1 1% / FP 1% | 5000 / 200 | 10,500 9µ silica 3,000 add'l silica | 0.912 | 42 | 52 | 0.46 | 0.569 | 17.6 | 70.4 | 3.1 |
| 41 | yes/yes | 79.5% SSPES / 17% LLDPE3 / AB5 1.5% / SLIP1 1% / FP 1% | 5000 /200 | 10,500 9µ silica 3,000 add'l silica | 0.905 | 48 | 54 | 0.376 | 0.497 | 18.6 | 54.0 | 3.4 |
| 42 | yes/no | SSPE5 80% / LLDPE3 15% / AB3 3.19%/SLIP1 1.13%/FP 1% | 5500 / 200 | 6,400 5µ silica 3,300 add'l silica | 0.905 | --- | --- | 0.151 | 0.312 | 9.00 | 79.8 | 17.5 |
| 43 | yes/no | SSPES 80% / LLDPE3 15% / AB11 2.87%/SLIP1 1.13%/FP1% | 5500 / 200 | 17,800 silica | 0.905 | --- | --- | 0.136 | 0.400 | 11.4 | 78.2 | 18.0 |
| 44 | yes/no | SSPES 80% / LLDPE3 / 2.55% AB6 / SLIP1 1.13% / FP 1% | 5500 / 200 | 6,375 7.6µ silica 3,300 add'l silica | 0.905 | --- | --- | 0.174 | 0.311 | 9.83 | 76.4 | 14.2 |
| 45 | yes/no | SSPES 80% / LLDPE3 / SLIP1 1.50% / AB6 1.2% / FP 1% | 7500 / 200 | 3,000 7.6µ silica 4,500 add'l silica | 0.905 | --- | --- | 0.178 | 0.342 | 17.8 | 57.0 | 9.1 |
| 46 | yes/no | SSPES 80% / LLDPE3 / AB3 4% / AB7 2.26% / FP 1% | 5500 / 200 | 8,000 5µ silica | 0.905 | --- | --- | 0.208 | 0.398 | 10.9 | 78 | 11.8 |
| 47 | yes/no | SSPE5 80% / LLDPE3 / AB3 4% /AB7 1.13% / FP 1% | 2750/ 200 | 8,000 5µ silica | 0.905 | --- | --- | 0.156 | 0.337 | 16.2 | 61.0 | 7.6 |
| 48 | yes/no | SSPES 80% / LLDPE3 / AB3 4% / AB11 1.13%/ FP 1% | 0/200 | 8,000 5µ silica 5,500 add'l silica | 0.905 | --- | --- | 0.208 | 0.350 | 23.2 | 52.0 | 5.2 |
| 49 | yes/no | SSPES 80% / LLDPE3 / AB11 0.565% / AB3 4% / FP 1% | 0/200 | 8,000 5µ silica 2,750 add'l silica | 0.905 | --- | --- | 0.184 | 0.386 | 10.8 | 77.8 | 12.5 |

Film Tubing Nos. 50-55 were also prepared in order to further assess the effects of various combinations of slip agents and antiblock particulates for use in the outside layer, in order to obtain the desired haze, gloss, and slip characteristics. Film Tubing Nos. 50-55 were 7-layer films of the same type as Film Tubing Nos. 2 through 32, and were prepared with dust added to the inside of the tubing during manufacturing. The results, including the composition of the additives in the outside layer, the haze, the gloss, the clarity, and the coefficient of friction, are provided in Table 26, below.

**Table 26**

| Film No. | Composition of Tubing Outside Layer | Slip agents: uhmw polysiloxane / fluoropolymer (ppm) | Silica Antiblock (ppm) in outside layer | Main et/α-olefin density (g/cm³) | COF (instant) | COF (Peak) | Haze (%) | Gloss (%) | Clarity |
|---|---|---|---|---|---|---|---|---|---|
| 50 | 80% SSPE5 / 16.7% LLDPE3 / 0.8% AB7 / 1.5% AB3 / 1% FP | 2000 /200 | 3000 5µ silica | 0.905 | 0.3154 | 0.462 | 12.42 | 71.34 | 4.64 |
| 51 | 80% SSPE5 / 15.3% LLDPE3 / 1.2% AB7 / 2.5% AB3 / 1% FP | 3000 / 200 | 5000 5µ silica | 0.905 | 0.129 | 0.2886 | 12.38 | 72.08 | 6.82 |
| 52 | 80% SSPE5 / 15.9% LLDPE3 / 1.6% AB7 / 1.5% AB3 / 1% FP | 4000 / 200 | 3,000 5µ silica | 0.905 | 0.152 | 0.2572 | 8.54 | 75.4 | 11.64 |
| 53 | 80% SSPE5 / 14.7% LLDPE3 / 0.8% AB7 / 3.5% AB3 / 1% FP | 2000 / 200 | 7,000 5µ silica | 0.905 | 0.1334 | 0.2122 | 10.746 | 74.52 | 17.18 |
| 54 | 80% SSPE5 / 13.9% LLDPE3 / 1.6% AB7 / 3.5% AB3 / 1% FP | 4000 / 200 | 7,000 5µ silica | 0.905 | 0.1326 | 0.2498 | 9.466 | 77.52 | 17.54 |
| 55 | 80% SSPE5 / 15.3% LLDPE3 / 1.2% AB7 / 2.5% AB3 / 1% FP | 3000 / 200 | 5,000 5µ silica | 0.905 | 0.405 | 0.5712 | 7.684 | 76.8 | 20.04 |

Film Tubing Nos. 56 through 59 were prepared entirely free of dust on either the inside of the tubing or the outside of the tubing. In each of these film tubings, a release agent and/or antiblock particulates were blended into each of the inside layer of the tubing and the outside layer of the tubing.

The multilayer structures of Film Tubing Nos. 56-59 are provided in Table 27 through Table 30, below. Tables 27-30 include the composition and thickness of each layer. Film Tubing Nos. 56 through 59 each had inside layers containing 7000 ppm erucamide, 7000 ppm bis-stearamide, and 6000 ppm 5 micron silica antiblock particulates. Film Tubing Nos. 56 and 59 had outside layers with a polymer density of about 0.907 g/cc, while Film Tubing Nos. 57 and 58 had outside layers with a polymer density of about 0.914 g/cc.

Table 31 provides results for gloss and haze, as a function of slip agent type and amount and antiblock type and amount.

| Table 27 Film Tubing No. 56 | | | | | | | |
|---|---|---|---|---|---|---|---|
| 80 SSPE1 | 64 VLDPE2 | EVA2 | EVA4 | PVDC1 | EVA4 | 64 VLDPE3 | 80% SSPE5 |
| 20 AC#5 | 30 EVA2 | | | | | 29.9 EVA2 | 13.9% LLDPE3 |
| | 6 SSPE3 | | | | | 6.1 SSPE3 | 3.5% AB3 |
| | | | | | | | 1.6% AB7 |
| | | | | | | | 1.0% FP |
| 10.668 µm (0.42) | 19.05 µm (0.75) | 2.032 µm (0.08) | 1.524 µm (0.06) | 5.08 µm (0.20) | 1.778 µm (0.07) | 6.35 µm (0.25) | 4.318 µm (0.17) |
| | | | | | | | OUTSIDE |
| INSIDE | | | | | | | |

| Table 28 Film Tubing No. 57 | | | | | | | |
|---|---|---|---|---|---|---|---|
| 80 SSPE1 | 64 VLDPE2 | EVA2 | EVA4 | PVDC1 | EVA4 | 64 VLDPE3 | 80 SSPE4 |
| 20 AC#5 | 30 EVA2 | | | | | 29.9 EVA2 | 13.9 SSPE3 |
| | 6 SSPE3 | | | | | 6.1 SSPE3 | 3.5 AB3 |
| | | | | | | | 1.6% AB7 |
| | | | | | | | 1.0% FP |
| 10.668 µm (0.42) | 19.05 µm (0.75) | 2.032 µm (0.08) | 1.524 µm (0.06) | 5.08 µm (0.20) | 1.778 µm (0.07) | 6.35 µm (0.25) | 4.318 µm (0.17) |
| INSIDE | | | | | | | OUTSIDE |

| Table 29 Film Tubing No. 58 | | | | | | | |
|---|---|---|---|---|---|---|---|
| 80 SSPE1 | 64 VLDPE2 | EVA2 | EVA4 | PVDC1 | EVA4 | 64 VLDPE3 | 65.3 SSPE4 |
| 20 AC#5 | 30 EVA2 | | | | | 29.9 EVA2 | 28.6 ssPEC1 |
| | 6 SSPE3 | | | | | 6.1 SSPE3 | 3.5 AB3 |
| | | | | | | | 1.6% AB7 |
| | | | | | | | 1.0% FP |
| 10.668 µm (0.42) | 19.05 µm (0.75) | 2.032 µm (0.08) | 1.524 µm (0.06) | 5.08 µm (0.20) | 1.778 µm (0.07) | 6.35 µm (0.25) | 4.318 µm (0.17) |
| INSIDE | | | | | | | OUTSIDE |

| Table 30 Film Tubing No. 59 | | | | | | | |
|---|---|---|---|---|---|---|---|
| 80 SSPE1 | 64 VLDPE2 | EVA2 | EVA4 | PVDC1 | EVA4 | 64 VLDPE3 | 80 SSPE5 |
| 20 AC#5 | 30 EVA2 | | | | | 29.9 EVA2 | 15.3 LLPE3 |
| | 6 SSPE3 | | | | | 6.1 SSPE3 | 2.5 AB3 |
| | | | | | | | 1.2% AB7 |
| | | | | | | | 1.0% FP |
| 10.668 µm (0.42) | 19.05 µm (0.75) | 2.032 µm (0.08) | 1.524 µm (0.06) | 5.08 µm (0.20) | 1.778 µm (0.07) | 6.35 µm (0.25) | 4.318 µm (0.17) |
| INSIDE | | | | | | | OUTSIDE |

**Table 31**

| Film No. | Composition of Tubing Outside Layer | Slip agents: uhmw polysiloxane / fluoropolymer (ppm) | Silica Antiblock (ppm) in outside layer | Main et/α-olefin density (g/cm³) | Av. Free Shrink @ 85C L / T (%) | Peak Load Impact Strength (N) | Avg.Haze (%) | Avg. Gloss (%) | Avg. Clarity (%) | Avg. Thickness (µm/mils) |
|---|---|---|---|---|---|---|---|---|---|---|
| 1 | | 0 | 0 | | 33 / 43 | 231.84 | 7.5 | 78 | 27.9 | 53.848/2.12 |
| 56 | 80% SSPE5 / 13.9% LLDPE3 / 3.5% AB3 / 1.6% AB7 / 1% FP | 4000 / 200 | 7,000 5µ silica | 0.905 | 34 / 43 | 208.67 | 9.6 | 75 | 20.3 | 48.768/1.92 |
| 59 | 80% SSPE5 / 15.3% LLDPE3 / 2.5% AB3 / 1.2% AB7 / 1% FP | 3000 / 200 | 5,000 5µ silica | 0.905 | 33 / 42 | 215.29 | 8.4 | 80 | 30.2 | 47.752/1.88 |
| 58 | 65.3% SSPE4 / 28.6% ssPEC1 / 3.5% AB3 / 1.6% AB7 / 1% FP | 4000 / 200 | 7,000 5µ silica | 0.912 | 33/42 | 193.94 | 10 | 76 | 24.3 | 47.752/1.88 |
| 57 | 80% SSPE4 / 13.9% SSPE3 / 3.5% AB3 / 1.6% AB7 / 1% FP | 4000 / 200 | 7,000 5µ silica | 0.912 | 33 / 43 | 188.31 | 9.1 | 76 | 16.5 | 49.276/1.94 |

Film Tubing Nos. 56 through 59 each had inside layers containing 7000 ppm erucamide, 7000 ppm bis-stearamide, and 6000 ppm 5 micron silica antiblock particulates. Film Tubing Nos. 56 and 59 had outside layers with a polymer density of about 0.907 g/cc, while Film Tubing Nos. 57 and 58 had outside layers with a polymer density of about 0.914 g/cc.

## Claims

1. A packaging article comprising a heat-shrinkable film tubing in lay-flat configuration, the heat-shrinkable film tubing having a first lay-flat side in contact with a second lay-flat side, the heat-shrinkable film tubing comprising a multilayer heat-shrinkable film comprising:
(A) an inside heat seal layer heat sealed to itself, with a first portion of the inside heat seal layer being on the first lay-flat side of the packaging article and a second portion of the inside heat seal layer being on the second lay-flat side of the packaging article, with the first portion of the heat seal layer being in contact with the second portion of the heat seal layer, with the heat seal layer comprising a seal layer polymeric composition comprising polyolefin having an average density of less than 0.92 g/cc, the inside heat seal layer having a thickness of at least 2.54 µm (0.1 mil), the inside heat seal layer further comprising:
(a)(i) antiblock particulates in an amount of at least 2000 ppm, based on total layer weight, the antiblock particulates having a mean particle size of at least 3 microns, and wherein the antiblock particulates are made from natural silica, synthetic silica, silicate, diatomaceous earth, fumed synthetic silica, precipitated synthetic silica, gelled synthetic silica, sodium calcium silicate, and sodium calcium aluminum silicate, talc, kaolin, clay, mica, silicate, aluminum silicate, silicon dioxide, magnesium silicate, calcium silicate, calcium carbonate, and magnesium oxide;
(a)(ii) a fast-blooming release agent in the inside seal layer in an amount of at least 1200 ppm, based on total layer weight, the fast-blooming release agent comprising at least one member selected from the group consisting of erucamide, oleamide, lauramide, lauric diethanolamide, monoglyceride, diglyceride, glycerol monoleate, glycerol monostearate; and
(a)(iii) a slow-blooming release agent in the inside seal layer in an amount of at least 1200 ppm, based on total layer weight, the slow-blooming release agent comprising at least one member selected from the group consisting of stearamide, bis-stearamide, ethylene bis-stearamide, stearyl stearamide, stearyl erucamide, erucyl erucamide, behanamide, ethylene bis-oleamide, oleyl palmitamide, stearate ester, sorbitan stearate, mono stearate, di stearate, tri stearate, sorbitan monolaurate, pentaerythritol stearate ester, polyglycerol stearate, zinc stearate, calcium stearate, magnesium stearate, sodium stearate, potassium stearate; and
(B) an outside layer comprising an outside layer polymeric composition, wherein the outside layer polymeric composition comprises at least one member selected from the group consisting of polyolefin, ethylene/alpha-olefin copolymer, ethylene/unsaturated ester copolymer, ionomer resin, propylene/ethylene copolymer, polystyrene, polyamide, polyester, and polycarbonate ;
wherein the inside layer has an inside surface and the outside layer has an outside surface, wherein at least one of the inside surface of the inside layer or the outside surface of the outside layer is free of dust thereon, and
wherein the packaging article has an open end, and the antiblock particulates, the fast-blooming release agent, and the slow-blooming release agent are present in the inside heat seal layer of the multilayer, heat-shrinkable film in an amount so that the packaging article opens in a Standard Opening Test in which a strand of the multilayer heat-shrinkable film tubing has been stored in lay-flat configuration while wrapped around a core having a diameter of 8.9 cm for 7 days, with the strand of the multilayer heat-shrinkable film tubing being wound onto the core to a roll diameter of 50 cm, with the film being wound at a tension of 179 gm/cm of lay-flat tubing width, at a conclusion of which a portion of the tubing 2.54 cm from the core is converted into a packaging article while the tubing remains in lay-flat configuration, with the resulting packaging article being provided with an open top having an open top edge transverse to a length of the tubing, with a lower lay-flat outside surface of the packaging article being in lay-flat contact with an upper horizontal surface of a support platform having a linear leading edge wider than a width of the packaging article and a length longer than the packaging article, with the lower lay-flat outside surface of the packaging article being in adhered contact with the upper horizontal surface of the support platform by a pair of tapes each having a width of 6 mm and an adhesion to steel of at least 90 g/6mm measured in accordance with AFERA 4001-ED.9/79, with each of the tapes running 3.8 cm (1.5 inches) from the linear leading edge of the packaging article in a direction perpendicular to the open top edge of the article and each tape having a centerline placed at a position corresponding with 33.3% of a distance across the lay flat width of the tubing, with the open top lip of the packaging article parallel to and directly above the leading edge of the support platform, the packaging article opening up upon being simultaneously subjected to
(i) a 0.5 second burst of air delivered from a de Laval air nozzle having an air consumption of 28.9 Nm³/h (=15 scfm), the air nozzle being positioned along a center line inclined 15 degrees from the support platform, the air nozzle having a tip positioned 7.6 cm (3 inches) from the lip of the packaging article, with the air nozzle being aimed at the open top lip of the packaging article, and
(ii) a 2 second flow of air from an air knife positioned parallel to and coincident with the support platform, the air knife having a discharge line 14.0 cm (5.5 inches) from the lip of the packaging article, the air knife having an air consumption of 76.5 Nm³/h (=45 scfm).

2. The packaging article according to Claim 1, wherein the heat seal layer has a thickness of from 5.08 to 27.94 µm (0.2 mil to 1.1 mil) and the seal layer polymeric composition has a density of less than 0.915 g/cm³, the antiblock particulates are present in an amount of from 1,500 to 20,000 ppm and have a mean particle size of from 3 to 25 microns, the fast-blooming release agent is present in an amount of from 2,000 to 20,000 ppm, and the slow blooming release agent is present in an amount of from 2,000 to 20,000 ppm.

3. The packaging article according to any of claims 1-2, wherein the outside layer is free of dust thereon, and the inside layer is free of dust thereon.

4. The packaging article according to any of claims 1-2, wherein the outside layer has an outside surface free of dust thereon, and the inside layer has an inside surface free of dust thereon, and the outside layer comprises at least one slip agent selected from the group consisting of polysiloxane, release agent, and wax.

5. The packaging article according to Claim 4, wherein the at least one slip agent is present in a total amount of from about 1,000 to 15,000 ppm, based on weight of outside layer.

6. The packaging article according to any of claims 1-2, wherein the outside layer has a thickness of at least 1.27 µm (0.05 mil), and the outside layer comprises at least one slip agent selected from the group consisting of polysiloxane, release agent, and wax, and the at least one slip agent is present in a total amount of from 1,000 to 15,000 ppm, based on weight of outside layer.

7. The packaging article according to any of claims 1-2, wherein the heat-shrinkable film has an L+T free shrink at 85°C of at least 50 percent, measured in accordance with ASTM D 2732.

8. The packaging article according to any of claims 1-2, wherein the inside layer has an inside surface exhibiting a peak coefficient of friction of less than 0.8, measured in accordance with ASTM D 1894, and the outside layer has an outside surface exhibiting a peak coefficient of friction of less than 0.8, measured in accordance with ASTM D 1894.

9. The packaging article according to any of claims 1-2, wherein the multilayer, heat-shrinkable film exhibits a specular gloss of at least 70%, measured in accordance with ASTM D2457 and/or wherein the multilayer heat-shrinkable film exhibits haze of less than 15%, measured in accordance with ASTM D 1003-13.

10. The packaging article according to any of claims 1-2, wherein the heat-shrinkable film tubing is has a heat-shrinkable patch film adhered to the outside surface thereof, and the outside layer of the heat-shrinkable film tubing comprises antiblock particulates having an average particle size of from 3000 microns to 10,000 microns, the antiblock particulates being present in the outside layer in an amount of from 3000 to 10,000 ppm, the patch film being adhered to the outside surface of the film tubing with a green bond strength of at least 0.18 kg/cm (1 lb/in) of patch width measured within 15 minutes of application of patch film to film tubing.

11. The packaging article according to any of claims 1-2, wherein the antiblock particulates comprise particulates having a refractive index of from 1.4 to 1.6.

12. The packaging article according to any of claims 1-2, wherein the packaging article is selected from the group consisting of an end-seal bag, a side-seal bag, a pouch, and a casing selected from the group consisting of lap-seal casing, fin-seal casing, and butt-seal backseamed casing with backseam tape.

13. An assembly comprising a set of imbricated packaging articles on two strands of tape, each of said strands of tape having a tacky surface and an opposite surface free of tack, and each of the packaging articles being in accordance with any of claims 1-2, with each of the packaging articles having two overlying sides of substantially identical dimensions, each of said packaging articles having one side secured to said tacky surface of both of said tapes, with the open end of each of the packaging articles being in the same direction respecting the tapes as all of the other packaging articles in the set, and each successive packaging article adhered to the tapes being offset from the other packaging articles of the set and overlying the opening of an underlying packaging article, with the tapes being spaced apart and parallel to one another.

14. A process for packaging a plurality of individual meat products, comprising:
(A) placing each of the plurality of individual meat products into each of a corresponding plurality of individual packaging articles having an open top, each of the corresponding individual packaging articles being dust free and being in accordance any of claims 1-2, to produce a plurality of partially packaged products including a first partially packaged product and a second partially packaged product;
(B) moving a first platen into a loading zone, the first platen being in a state of continuous motion;
(C) placing the first partially packaged product onto a first platen while the first platen is moving through the loading zone;
(D)
(d)(i) moving the first platen out of the loading zone while the first partially-packaged product remains on the first platen; and
(d)(ii) bringing a first vacuum chamber lid down over and into contact with the first platen to form a first vacuum chamber having the first partially packaged product therein while the first platen remains in continuous motion;
(d)(iii) evacuating the atmosphere from within the first vacuum chamber, including evacuating the atmosphere from within the first partially packaged product, as the first vacuum chamber continues to travel;
(d)(iv) sealing closed the individual packaging article of the first partially packaged product while the atmosphere remains evacuated from the first vacuum chamber to produce a first vacuum packaged product, as the first vacuum chamber continues to travel;
(d)(v) allowing atmosphere to re-enter the first vacuum chamber as the first platen, having the first vacuum packaged product thereon, continues to travel;
(d)(vi) separating the first vacuum chamber lid from the first platen, as the first platen continues to travel,
(d)(vii) removing the first vacuum packaged product from the first platen, as the first platen continues to travel;
(E) placing the second partially packaged product onto a second platen after the first platen has moved out of the loading zone and the second platen has moved into the loading zone;
(F)
(f) (i) moving the second platen out of the loading zone while the second partially-packaged product remains on the second platen; and
(f) (ii) bringing a second vacuum chamber lid down over and into contact with the second platen to form a second vacuum chamber having the second partially packaged product therein while the second platen remains in continuous motion;
(f)(iii) evacuating the atmosphere from within the second vacuum chamber, including evacuating the atmosphere from within the second partially packaged product, as the second vacuum chamber continues to travel;
(f)(iv) sealing closed the individual packaging article of the second partially packaged product while the atmosphere remains evacuated from the second vacuum chamber to produce a second vacuum packaged product, as the second vacuum chamber continues to travel;
(f)(v) allowing atmosphere to re-enter the second vacuum chamber as the second platen, having the second vacuum packaged product thereon, continues to travel;
(f)(vi) separating the second vacuum chamber lid from the second platen, as the second platen continues to travel,
(f)(vii) removing the second vacuum packaged product from the second platen, as the second platen continues to travel.

## Patentansprüche

1. Verpackungsartikel, der einen wärmeschrumpfbaren Folienschlauch in flachliegender Konfiguration umfasst, wobei der wärmeschrumpfbare Folienschlauch eine erste flachliegende Seite aufweist, die sich in Kontakt mit einer zweiten flachliegenden Seite befindet, wobei der wärmeschrumpfbare Folienschlauch eine mehrschichtige wärmeschrumpfbare Folie umfasst, die
(A) eine innere Heißsiegelschicht, die mit sich selbst heißversiegelt ist, wobei sich ein erster Abschnitt der inneren Heißsiegelschicht auf der ersten flachliegenden Seite des Verpackungsartikels und ein zweiter Abschnitt der inneren Heißsiegelschicht auf der zweiten flachliegenden Seite des Verpackungsartikels befindet, wobei sich der erste Abschnitt der inneren Heißsiegelschicht in Kontakt mit dem zweiten Abschnitt der inneren Heißsiegelschicht befindet, wobei die Heißsiegelschicht eine Siegelschicht-Polymerzusammensetzung umfasst, die Polyolefin mit einer durchschnittlichen Dichte von weniger als 0,92 g/cm³ umfasst, wobei die innere Heißsiegelschicht eine Dicke von mindestens 2,54 µm (0,1 mil) aufweist, wobei die innere Heißsiegelschicht weiterhin
(a)(i) Antiblock-Partikel in einer Menge von mindestens 2000 ppm, bezogen auf das Gesamtgewicht der Schicht, wobei die Antiblock-Partikel eine mittlere Partikelgröße von mindestens 3 Mikrometern aufweisen und wobei die Antiblock-Partikel aus natürlichem Siliziumdioxid, synthetischem Siliziumdioxid, Silikat, Kieselgur, pyrogenem synthetischem Siliziumdioxid, gefälltem synthetischem Siliziumdioxid, geliertem synthetischem Siliziumdioxid, Natriumcalciumsilikat und Natriumcalciumaluminiumsilikat, Talk, Kaolin, Ton, Glimmer, Silikat, Aluminiumsilikat, Siliciumdioxid, Magnesiumsilikat, Calciumsilikat, Calciumcarbonat und Magnesiumoxid hergestellt sind;
(a)(ii) ein schnell ausblühendes Trennmittel in der inneren Versiegelungsschicht in einer Menge von mindestens 1200 ppm, bezogen auf das Gesamtgewicht der Schicht, wobei das schnell ausblühende Trennmittel mindestens ein Mitglied umfasst, das aus der Gruppe ausgewählt ist, bestehend aus Erucamid, Oleamid, Lauramid, Laurinsäurediethanolamid, Monoglycerid, Diglycerid, Glycerinmonoleat und Glycerinmonostearat besteht; und
(a)(iii) ein langsam ausblühendes Trennmittel in der inneren Versiegelungsschicht in einer Menge von mindestens 1200 ppm, bezogen auf das Gesamtgewicht der Schicht, wobei das langsam ausblühende Trennmittel mindestens ein Mitglied umfasst, das aus der Gruppe ausgewählt ist, bestehend aus Stearamid, Bis-Stearamid, Ethylenbisstearamid, Stearylstearamid, Stearylerucamid, Erucylerucamid, Behanamid, Ethylenbisoleamid, Oleylpalmitamid, Stearatester, Sorbitanstearat, Monostearat, Diestearat, Tristearat, Sorbitanmonolaurat, Pentaerythritolstearatester, Polyglycerinstearat, Zinkstearat, Calciumstearat, Magnesiumstearat, Natriumstearat, Kaliumstearat; umfasst und
(B) eine Außenschicht umfasst, die eine Außenschichtpolymerzusammensetzung umfasst, wobei die Außenschichtpolymerzusammensetzung mindestens ein Mitglied umfasst, das aus der Gruppe ausgewählt ist, bestehend aus Polyolefin, Ethylen/Alpha-Olefin-Copolymer, Ethylen/ungesättigtem Ester-Copolymer, Ionomerharz, Propylen/Ethylen-Copolymer, Polystyrol, Polyamid, Polyester und Polycarbonat;
wobei die Innenschicht eine Innenfläche aufweist und die Außenschicht eine Außenfläche aufweist, wobei mindestens eine der Innenfläche der Innenschicht oder der Außenfläche der Außenschicht darauf staubfrei ist, und
wobei der Verpackungsartikel ein offenes Ende aufweist und die Antiblock-Partikel, das schnell ausblühende Trennmittel und das langsam ausblühende Trennmittel in der inneren Heißsiegelschicht der mehrschichtigen wärmeschrumpfbaren Folie in einer solchen Menge vorhanden sind, dass sich der Verpackungsartikel in einem Standard-Öffnungstest öffnet, bei dem ein Strang des mehrschichtigen wärmeschrumpfbaren Folienschlauchs 7 Tage lang in flachliegender Konfiguration um einen Kern mit einem Durchmesser von 8,9 cm gewickelt gelagert wurde, wobei der Strang des mehrschichtigen wärmeschrumpfbaren Folienschlauchs auf den Kern zu einem Rollendurchmesser von 50 cm aufgewickelt wurde, wobei die Folie mit einer Spannung von 179 g/cm der flachliegenden Schlauchbreite aufgewickelt wurde, woraufhin ein Abschnitt des Schlauchs 2,54 cm vom Kern entfernt in einen Verpackungsartikel umgewandelt wurde, während der Schlauch in flachliegender Konfiguration verblieb, wobei der resultierende Verpackungsartikel mit einer offenen Oberseite versehen wurde, die eine offene Oberkante quer zur Länge des Schlauchs aufweist, wobei sich eine untere flachliegende Außenfläche des Verpackungsartikels in flachliegendem Kontakt mit einer oberen horizontalen Fläche einer Stützplattform befindet, die eine lineare Vorderkante aufweist, die breiter als die Breite des Verpackungsartikels und länger als der Verpackungsartikel ist, wobei sich die untere flachliegende Außenfläche des Verpackungsartikels durch ein Paar Klebebänder mit einer Breite von jeweils 6 mm und einer Haftung auf Stahl von mindestens 90 g/6 mm, gemessen gemäß AFERA 4001-ED.9/79, in haftendem Kontakt mit der oberen horizontalen Fläche der Stützplattform befindet, wobei jedes der Klebebänder 3,8 cm (1,5 Zoll) von der linearen Vorderkante des Verpackungsartikels in einer Richtung senkrecht zur offenen Oberkante des Artikels verläuft und jedes Klebeband eine Mittellinie aufweist, die an einer Position angeordnet ist, die 33,3 % der Breite des flach liegenden Schlauchs entspricht, wobei die offene Oberkante des Verpackungsartikels parallel zur Vorderkante der Auflageplattform und direkt über der Vorderkante der Auflageplattform, wobei sich der Verpackungsartikel öffnet, während er gleichzeitig
(i) einem 0,5 Sekunden langen Luftstoß ausgesetzt wird, der aus einer de Laval-Luftdüse mit einem Luftverbrauch von 28,9 Nm³/h (=15 scfm) abgegeben wird, wobei die Luftdüse entlang einer um 15 Grad von der Auflageplattform geneigten Mittellinie positioniert ist, wobei die Luftdüse eine Spitze aufweist, die 7,6 cm (3 Zoll) von der Lippe des Verpackungsartikels entfernt ist, wobei die Luftdüse auf die offene Oberlippe des Verpackungsartikels gerichtet ist, und
(ii) einem 2 Sekunden langen Luftstrom aus einem Luftmesser ausgesetzt wird, das parallel und bündig mit der Auflageplattform positioniert ist, wobei das Luftmesser eine Auslasslinie 14,0 cm (5,5 Zoll) von der Lippe des Verpackungsartikels entfernt aufweist und einen Luftverbrauch von 76,5 Nm³/h (=45 scfm) hat.

2. Verpackungsartikel nach Anspruch 1, wobei die Heißsiegelschicht eine Dicke von 5,08 bis 27,94 µm (0,2 mil bis 1,1 mil) aufweist und die Außenschichtpolymerzusammensetzung eine Dichte von weniger als 0,915 g/cm³ aufweist,
wobei die Antiblock-Partikel in einer Menge von 1.500 bis 20. 000 ppm vorliegen und eine mittlere Partikelgröße von 3 bis 25 Mikrometern aufweisen, wobei das schnell ausblühende Trennmittel in einer Menge von 2.000 bis 20.000 ppm vorliegt und das langsam ausblühende Trennmittel in einer Menge von 2.000 bis 20.000 ppm vorliegt.

3. Verpackungsartikel nach einem der Ansprüche 1 bis 2, wobei die Außenschicht darauf staubfrei ist und die Innenschicht darauf staubfrei ist.

4. Verpackungsartikel nach einem der Ansprüche 1 bis 2, wobei die Außenschicht eine Außenfläche aufweist, die darauf staubfrei ist und die Innenschicht eine Innenfläche aufweist, die darauf staubfrei ist, und die Außenschicht mindestens ein Gleitmittel umfasst, das aus der Gruppe ausgewählt ist, bestehend aus Polysiloxan, Trennmittel und Wachs.

5. Verpackungsartikel nach Anspruch 4, wobei das mindestens eine Gleitmittel in einer Gesamtmenge von etwa 1.000 bis 15.000 ppm, bezogen auf das Gewicht der Außenschicht, vorhanden ist.

6. Verpackungsartikel nach einem der Ansprüche 1 bis 2, wobei die Außenschicht eine Dicke von mindestens 1,27 µm (0,05 mil) aufweist, und die Außenschicht mindestens ein Gleitmittel umfasst, das aus der Gruppe ausgewählt ist, bestehend aus Polysiloxan, Trennmittel und Wachs, und das mindestens eine Gleitmittel in einer Gesamtmenge von 1.000 bis 15.000 ppm, bezogen auf das Gewicht der Außenschicht, vorhanden ist.

7. Verpackungsartikel nach einem der Ansprüche 1 bis 2, wobei die wärmeschrumpfbare Folie eine L+T-freie Schrumpfung bei 85 °C von mindestens 50 Prozent aufweist, gemessen gemäß ASTM D 2732.

8. Verpackungsartikel nach einem der Ansprüche 1 bis 2, wobei die Innenschicht eine Innenfläche aufweist, die einen Spitzenreibungskoeffizienten von weniger als 0,8 aufweist, gemessen gemäß ASTM D 1894, und die Außenschicht eine Außenfläche aufweist, die einen Spitzenreibungskoeffizienten von weniger als 0,8 aufweist, gemessen gemäß ASTM D 1894.

9. Verpackungsartikel nach einem der Ansprüche 1 bis 2, wobei die mehrschichtige, wärmeschrumpfbare Folie einen Spiegelglanz von mindestens 70 % aufweist, gemessen gemäß ASTM D2457, und/oder wobei die mehrschichtige, wärmeschrumpfbare Folie eine Trübung von weniger als 15 % aufweist, gemessen gemäß ASTM D1003-13.

10. Verpackungsartikel nach einem der Ansprüche 1 bis 2, wobei der wärmeschrumpfbare Folienschlauch eine wärmeschrumpfbare Patchfolie aufweist, die an seiner Außenfläche haftet, und die Außenschicht des wärmeschrumpfbaren Folienschlauchs Antiblock-Partikel mit einer durchschnittlichen Partikelgröße von 3000 bis 10.000 Mikrometern umfasst, wobei die Antiblock-Partikel in der Außenschicht in einer Menge von 3000 bis 10.000 ppm vorhanden sind und die Patchfolie mit einer Anfangshaftfestigkeit von mindestens 0,18 kg/cm (1 lb/in) der Patchfolienbreite, gemessen innerhalb von 15 Minuten nach dem Aufbringen der Patchfolie auf den Folienschlauch, an der Außenfläche des Folienschlauchs haftet.

11. Verpackungsartikel nach einem der Ansprüche 1 bis 2, wobei die Antiblock-Partikel Partikel mit einem Brechungsindex von 1,4 bis 1,6 umfassen.

12. Verpackungsartikel nach einem der Ansprüche 1 bis 2, wobei der Verpackungsartikel aus der Gruppe ausgewählt ist, bestehend aus einem Beutel mit Endsiegel, einem Beutel mit Seitensiegel, einer Tasche (pouch) und einer Hülle, wobei die Hülle aus der Gruppe ausgewählt ist, bestehend aus einer Überlappungsversiegelungshülle, einer Flügelversiegelungshülle und einer Stoßversiegelungshülle mit Rückennaht und Rückennahtband.

13. Anordnung, die einen Satz von überlappenden Verpackungsartikeln auf zwei Klebebandstreifen umfasst, wobei jeder der Klebebandstreifen eine klebrige Oberfläche und eine gegenüberliegende, nicht klebrige Oberfläche aufweist und jeder der Verpackungsartikel einem der Ansprüche 1 bis 2 entspricht, wobei jeder der Verpackungsartikel zwei übereinanderliegende Seiten mit im Wesentlichen identischen Abmessungen aufweist, wobei jeder der Verpackungsartikel mit einer Seite an der klebrigen Oberfläche beider Bänder befestigt ist, wobei das offene Ende jedes der Verpackungsartikel in Bezug auf die Bänder in die gleiche Richtung wie alle anderen Verpackungsartikel in dem Satz zeigt und jeder aufeinanderfolgende Verpackungsartikel, der an den Bändern haftet, gegenüber den anderen Verpackungsartikeln des Satzes versetzt ist und die Öffnung eines darunter liegenden Verpackungsartikels überlagert, wobei die Bänder voneinander beabstandet und parallel zueinander sind.

14. Verfahren zum Verpacken einer Vielzahl einzelner Fleischprodukte, bei dem
(A) jedes der Vielzahl einzelner Fleischprodukte in einen entsprechenden einzelnen Verpackungsartikel mit offener Oberseite gelegt wird, wobei jeder der entsprechenden einzelnen Verpackungsartikel staubfrei ist und einem der Ansprüche 1 bis 2 entspricht, um eine Vielzahl teilweise verpackter Produkte herzustellen, darunter ein erstes teilweise verpacktes Produkt und ein zweites teilweise verpacktes Produkt;
(B) eine erste Platte in eine Ladezone bewegt wird, wobei sich die erste Platte in einer kontinuierlichen Bewegung befindet;
(C) das erste teilweise verpackte Produkt auf eine erste Platte gelegt wird, während sich die erste Platte durch die Ladezone bewegt;
(D)
(d)(i) die erste Platte aus der Ladezone bewegt wird, während das erste teilweise verpackte Produkt auf der ersten Platte verbleibt; und;
(d)(ii) ein erster Vakuumkammerdeckel über die erste Platte gesenkt und mit dieser in Kontakt gebracht wird, um eine erste Vakuumkammer zu bilden, in der sich das erste teilweise verpackte Produkt befindet, während die erste Platte in kontinuierlicher Bewegung bleibt;
(d)(iii) die Atmosphäre aus dem Inneren der ersten Vakuumkammer evakuiert wird, einschließlich des Evakuierens der Atmosphäre aus dem Inneren des ersten teilweise verpackten Produkts, während sich die erste Vakuumkammer weiterbewegt;
(d)(iv) der einzelne Verpackungsartikel des ersten teilweise verpackten Produkts verschlossen wird, während die Atmosphäre aus der ersten Vakuumkammer evakuiert bleibt, um ein erstes vakuumverpacktes Produkt herzustellen, während sich die erste Vakuumkammer weiterbewegt;
(d)(v) Atmosphäre wieder in die erste Vakuumkammer einströmen gelassen wird, während sich die erste Platte mit dem ersten vakuumverpackten Produkt darauf weiterbewegt;
(d)(vi) der erste Vakuumkammerdeckel von der ersten Platte getrennt wird, während sich die erste Platte weiterbewegt,
(d)(vii) das erste vakuumverpackte Produkt von der ersten Platte entfernt wird, während sich die erste Platte weiterbewegt;
(E) das zweite teilweise verpackte Produkt auf eine zweite Platte gelegt wird, nachdem sich die erste Platte aus der Ladezone herausbewegt hat und die zweite Platte sich in die Ladezone hineinbewegt hat;
(F)
(f)(i) die zweite Platte aus der Ladezone bewegt wird, während das zweite teilweise verpackte Produkt auf der zweiten Platte verbleibt; und
(f) (ii) ein zweiter Vakuumkammerdeckel über die zweite Platte gesenkt und mit dieser in Kontakt gebracht wird, um eine zweite Vakuumkammer zu bilden, in der sich das zweite teilweise verpackte Produkt befindet, während die zweite Platte in kontinuierlicher Bewegung bleibt;
(f)(iii) die Atmosphäre aus dem Inneren der zweiten Vakuumkammer evakuiert wird, einschließlich des Evakuierens der Atmosphäre aus dem Inneren des zweiten teilweise verpackten Produkts, während sich die zweite Vakuumkammer weiter bewegt;
(f)(iv) der einzelne Verpackungsartikel des zweiten teilweise verpackten Produkts verschlossen wird, während die Atmosphäre aus der zweiten Vakuumkammer evakuiert bleibt, um ein zweites vakuumverpacktes Produkt herzustellen, während sich die zweite Vakuumkammer weiterbewegt;
(f)(v) Atmosphäre wieder in die zweite Vakuumkammer einströmen lassen wird, während sich die zweite Platte mit dem darauf befindlichen zweiten vakuumverpackten Produkt weiterbewegt;
(f)(vi) der zweite Vakuumkammerdeckel von der zweiten Platte getrennt wird, während sich die zweite Platte weiterbewegt.
(f)(vii) das zweite vakuumverpackte Produkt von der zweiten Platte entfernt wird, während sich die zweite Platte weiterbewegt.

## Revendications

1. Article d'emballage comprenant un tubage à film thermorétractable dans une configuration à plat,
le tubage à film thermorétractable ayant un premier côté à plat en contact avec un deuxième côté à plat, le tubage à film thermorétractable comprenant un film thermorétractable multicouche comprenant:
(A) une couche de thermoscellage interne scellée sur elle-même, avec une première partie de la couche de thermoscellage interne qui se trouve sur le premier côté à plat de l'article d'emballage et une deuxième partie de la couche de thermoscellage interne qui se trouve sur le deuxième côté à plat de l'article d'emballage, avec la première partie de la couche de thermoscellage qui est en contact avec la deuxième partie de la couche de thermoscellage, avec la couche de thermoscellage comprenant une composition polymère de couche de scellage comprenant un polyoléfine ayant une densité moyenne inférieure à 0,92 g/cc, la couche de thermoscellage interne ayant une épaisseur d'au moins 2,54 µm (0,1 mil), la couche de thermoscellage interne comprenant en outre:
(a) (i) des particules antiadhérentes en une quantité d'au moins 2000 ppm, sur la base du poids total de la couche, les particules antiadhérentes ayant une taille moyenne de particules d'au moins 3 microns, et dans lequel les particules antiadhérentes sont composées de silice naturelle, de silice synthétique, de silicate, de terre de diatomée, de silice synthétique sublimée, de silice synthétique précipitée, de silice synthétique gélifiée, de silicate de sodium-calcium, et de silicate d'aluminium de sodium-calcium, de talc, de kaolin, d'argile, de mica, de silicate, de silicate d'aluminium, de dioxyde de silicium, de silicate de magnésium, de silicate de calcium, de carbonate de calcium, et d'oxyde de magnésium;
(a) (ii) un agent de démoulage à action rapide dans la couche de scellage interne en une quantité d'au moins 1200 ppm, sur la base du poids total de la couche, l'agent de démoulage à action rapide comprenant au moins un élément choisi parmi le groupe consistant en de l'érucamide, de l'oléamide, du lauramide, du diéthanolamide laurique, du monoglycéride, du diglycéride, du monoléate de glycérol, du monostéarate de glycérol; et
(a) (iii) un agent de démoulage à action lente dans la couche de scellage interne en une quantité d'au moins 1200 ppm, sur la base du poids total de la couche, l'agent de démoulage à action lente comprenant au moins un élément choisi parmi le groupe consistant en du stéaramide, du bis-stéaramide, de l'éthylène bis-stéaramide, du stéaryl stéaramide, du stéaryl érucamide, de l'érucyl érucamide, du béhanamide, de l'éthylène bis-oléamide, de l'oléyl palmitamide, de l'ester de stéarate, du stéarate de sorbitanne, du mono stéarate, du di stéarate, du tri stéarate, du monolaurate de sorbitan, de l'ester de stéarate pentaérythritol, du stéarate de polyglycérol, du stéarate de zinc, du stéarate de calcium, du stéarate de magnésium, du stéarate de sodium, du stéarate de potassium; et
(B) une couche externe comprenant une composition polymère de couche externe, dans lequel la composition polymère de couche externe comprend au moins un élément choisi parmi le groupe consistant en un polyoléfine, un copolymère d'éthylène/alpha-oléfine, un copolymère d'éthylène/d'ester insaturé, une résine ionomère, un copolymère de propylène/éthylène, du polystyrène, un polyamide, du polyester et un polycarbonate;
dans lequel la couche interne possède une surface interne et la couche externe possède une surface externe, dans lequel au moins l'une de la surface interne ou de la surface externe de la couche externe est exempte de poussière, et
dans lequel l'article d'emballage possède une extrémité ouverte, et les particules antiadhérentes, l'agent de démoulage à action rapide et l'agent de démoulage à action lente sont présents dans la couche de thermoscellage interne du film thermorétractable multicouche en une quantité de sorte que l'article d'emballage s'ouvre lors d'un test d'ouverture standard lors duquel un brin du tubage à film thermorétractable multicouche a été stocké dans une configuration à plat tout en étant enroulé autour d'un noyau ayant un diamètre de 8,9 cm pendant 7 jours, avec le brin du tubage à film thermorétractable multicouche enroulé sur le noyau selon un diamètre d'enroulement de 50 cm, avec le film enroulé à une tension de 179 gm/cm de la largeur du tubage à plat, à la fin duquel une partie du tubage à 2,54 cm du noyau est transformée en un article d'emballage pendant que le tubage reste dans une configuration à plat, l'article d'emballage résultant étant équipé d'une partie supérieure ouverte ayant un bord supérieur ouvert transversal par rapport à une longueur du tubage, avec une surface externe à plat inférieure de l'article d'emballage qui est en contact à plat avec une surface horizontale supérieure d'une plate-forme de support ayant un bord d'attaque linéaire plus large qu'une largeur de l'article d'emballage et une longueur supérieure à celle de l'article d'emballage, avec la surface externe à plat inférieure de l'article d'emballage qui est en contact par adhérence avec la surface horizontale supérieure de la plate-forme de support à l'aide d'une paire de rubans adhésifs ayant chacun une largeur de 6 mm et une adhérence à l'acier d'au moins 90 g/6 mm mesurée selon la norme AFERA 4001-ED.9/79, avec chacun des rubans adhésifs se trouvant à 3,8 cm (1,5 pouce) du bord d'attaque linéaire de l'article d'emballage dans une direction perpendiculaire au bord supérieur ouvert de l'article, et chaque ruban adhésif ayant une ligne centrale placée à un emplacement qui correspond à 33,3 % d'une distance en travers de la largeur à plat du tubage, avec le rebord supérieur ouvert de l'article d'emballage parallèle à et directement au-dessus du bord d'attaque de la plate-forme de support, l'article d'emballage s'ouvrant vers le haut lorsqu'il est simultanément soumis à
(i) une salve d'air de 0,5 sec délivrée par une tuyère à air Laval ayant une consommation d'air de 28,9 Nm³/h (=15 scfm), la tuyère à air étant positionnée le long d'une ligne centrale inclinée à 15 degrés par rapport à la plate-forme de support, la tuyère à air ayant une extrémité positionnée à 7,6 cm (3 pouces) du rebord de l'article d'emballage, avec la tuyère à air qui est dirigée vers le rebord supérieur ouvert de l'article d'emballage, et
(ii) un flux d'air de 2 secondes qui provient d'une lame d'air positionnée parallèlement à et qui coïncide avec la plate-forme de support, la lame d'air ayant une conduite d'évacuation située à 14 cm (5,5 pouces) du rebord de l'article d'emballage, la lame d'air ayant une consommation d'air de 76,5 Nm³/h (=45 scfm).

2. Article d'emballage selon la revendication 1, dans lequel la couche de thermoscellage présente une épaisseur de 5,08 à 27,94 µm (0,2 mil à 1,1 mil) et la composition polymère de couche de scellage présente une densité inférieure à 0,915 g/cm³, les particules antiadhérentes sont présentes en une quantité de 1500 à 20 000 ppm et présentent une taille de particules moyenne de 3 à 25 microns, l'agent de démoulage à action rapide est présent en une quantité de 2000 à 20 000 ppm, et l'agent de démoulage à action lente est présent en une quantité de 2000 à 20 000 ppm.

3. Article d'emballage selon l'une quelconque des revendications 1 à 2, dans lequel la couche externe est exempte de poussière, et la couche interne est exempte de poussière.

4. Article d'emballage selon l'une quelconque des revendications 1 à 2, dans lequel la couche externe possède une surface externe exempte de poussière, et la couche interne possède une surface interne exempte de poussière, et la couche externe comprend au moins un agent glissant choisi parmi le groupe consistant en un polysiloxane, un agent de démoulage et de la cire.

5. Article d'emballage selon la revendication 4, dans lequel l'au moins un agent glissant est présent en une quantité totale d'environ 1000 à 15 000 ppm, sur la base du poids de la couche externe.

6. Article d'emballage selon l'une quelconque des revendications 1 à 2, dans lequel la couche externe présente une épaisseur d'au moins 1,27 µm (0,05 mil), et la couche externe comprend au moins un agent glissant choisi parmi le groupe consistant en un polysiloxane, un agent de démoulage et de la cire, et l'au moins un agent glissant est présent en une quantité totale de 1000 à 15 000 ppm, sur la base du poids de la couche externe.

7. Article d'emballage selon l'une quelconque des revendications 1 à 2, dans lequel le film thermorétractable présente un rétrécissement exempt de L+T à 85°C d'au moins 50 pourcents, mesuré selon la norme ASTM D 2732.

8. Article d'emballage selon l'une quelconque des revendications 1 à 2, dans lequel la couche interne possède une surface interne qui présente un coefficient de frottement maximal inférieur à 0,8, mesuré selon la norme ASTM D 1894, et la couche externe possède une surface externe qui présente un coefficient de frottement maximal inférieur à 0,8, mesuré selon la norme ASTM D 1894.

9. Article d'emballage selon l'une quelconque des revendications 1 à 2, dans lequel le film thermorétractable multicouche présente un brillant spéculaire d'au moins 70 %, mesuré selon la norme ASTM D2457 et/ou dans lequel le film thermorétractable multicouche présente un trouble inférieur à 15 %, mesuré selon la norme ASTM D1003-13.

10. Article d'emballage selon l'une quelconque des revendications 1 à 2, dans lequel le tubage à film thermorétractable possède un film de retouche thermorétractable collé sur la surface externe de celui-ci, et la couche externe du tubage à film thermorétractable comprend des particules antiadhérentes ayant une taille de particules moyenne de 3000 microns à 10 000 microns, les particules antiadhérentes étant présentes dans la couche externe en une quantité de 3000 à 10 000 ppm, le film de retouche étant collé sur la surface externe du tubage à film avec une résistance d'adhésion d'au moins 0,18 kg/cm (1 lb/in) de la largeur de retouche mesurée dans les 15 minutes suivant l'application du film de retouche sur le tubage à film.

11. Article d'emballage selon l'une quelconque des revendications 1 à 2, dans lequel les particules antiadhérentes comprennent des particules ayant un indice de réfraction de 1,4 à 1,6.

12. Article d'emballage selon l'une quelconque des revendications 1 à 2, dans lequel l'article d'emballage est choisi parmi le groupe consistant en un sachet à fermeture hermétique, un sachet à soudures latérales, une pochette, et une boîte choisie parmi le groupe consistant en une boîte à scellage chevauchant, une boîte à scellage à bords repliés, et une boîte à joint d'envers à scellage de bout en bout avec un ruban adhésif de joint d'envers.

13. Ensemble comprenant un lot d'articles d'emballage imbriqués sur deux brins de ruban adhésif, chacun desdits brins de ruban adhésif ayant une surface collante et une surface opposée exempte de collant, et chacun des articles d'emballage étant selon l'une quelconque des revendications 1 à 2, avec chacun des articles d'emballage ayant deux côtés qui se recouvrent présentant des dimensions sensiblement identiques, chacun desdits articles d'emballage ayant un côté fixé sur ladite surface collante de deux desdits rubans adhésifs, avec l'extrémité ouverte de chacun des articles d'emballage qui se trouve dans la même direction, par rapport aux rubans adhésifs, que tous les autres articles d'emballage du lot, et chaque article d'emballage successif collé sur les rubans adhésifs étant décalé par rapport aux autres articles d'emballage du lot et recouvrant l'ouverture d'un article d'emballage situé en-dessous, avec les rubans adhésifs qui sont espacés et parallèles les uns aux autres.

14. Processus d'emballage d'une pluralité de produits carnés individuels, comprenant:
(A) le placement de chacun de la pluralité de produits carnés individuels dans chacun d'une pluralité correspondante d'articles d'emballage individuels ayant une partie supérieure ouverte, chacun des articles d'emballage individuels correspondants étant exempt de poussière et étant selon l'une quelconque des revendications 1 à 2, afin de produire une pluralité de produits partiellement emballés comportant un premier produit partiellement emballé et un deuxième produit partiellement emballé;
(B) le déplacement d'un premier plateau vers une zone de chargement, le premier plateau étant dans un état de déplacement continu;
(C) le placement du premier produit partiellement emballé sur un premier plateau pendant que le premier plateau se déplace à travers la zone de chargement;
(D)
(d) (i) le déplacement du premier plateau hors de la zone de chargement pendant que le premier produit partiellement emballé reste sur le premier plateau; et
(d) (ii) le fait d'amener le capot d'une première chambre de vide sur et en contact avec le premier plateau afin de former une première chambre de vide ayant le premier produit partiellement emballé à l'intérieur pendant que le premier plateau reste en déplacement continu;
(d) (iii) l'évacuation de l'atmosphère de l'intérieur de la première chambre de vide, y compris l'évacuation de l'atmosphère de l'intérieur du premier produit partiellement emballé, au fur et à mesure que la première chambre de vide continue de se déplacer;
(d) (iv) la fermeture étanche de l'article d'emballage individuel du premier produit partiellement emballé pendant que l'atmosphère reste évacuée de la première chambre de vide afin de produire un premier produit emballé sous vide, au fur et à mesure que la première chambre de vide continue de se déplacer;
(d) (v) le fait de laisser l'atmosphère pénétrer à nouveau dans la première chambre de vide au fur et à mesure que le premier plateau, ayant le premier produit emballé sous vide posé dessus, continue de se déplacer;
(d) (vi) la séparation du capot de la première chambre de vide du premier plateau, au fur et à mesure que le premier plateau continue de se déplacer,
(d) (vii) le retrait du premier produit emballé sous vide du premier plateau, au fur et à mesure que le premier plateau continue de se déplacer;
(E) le placement du deuxième produit partiellement emballé sur un deuxième plateau après que le premier plateau est sorti de la zone de chargement et que le deuxième plateau s'est déplacé vers la zone de chargement;
(F)
(f) (i) le déplacement du deuxième plateau hors de la zone de chargement pendant que le deuxième produit partiellement emballé reste sur le deuxième plateau; et
(f) (ii) le fait d'amener le capot d'une deuxième chambre de vide sur et en contact avec le deuxième plateau afin de former une deuxième chambre de vide ayant le deuxième produit partiellement emballé à l'intérieur pendant que le deuxième plateau reste en déplacement continu;
(f) (iii) l'évacuation de l'atmosphère de l'intérieur de la deuxième chambre de vide, y compris l'évacuation de l'atmosphère de l'intérieur du deuxième produit partiellement emballé, au fur et à mesure que la deuxième chambre de vide continue de se déplacer;
(f) (iv) la fermeture étanche de l'article d'emballage individuel du deuxième produit partiellement emballé pendant que l'atmosphère reste évacuée de la deuxième chambre de vide afin de produire un deuxième produit emballé sous vide, au fur et à mesure que la deuxième chambre de vide continue de se déplacer;
(f) (v) le fait de laisser l'atmosphère pénétrer à nouveau dans la deuxième chambre de vide au fur et à mesure que le deuxième plateau, ayant le deuxième produit emballé sous vide posé dessus, continue de se déplacer;
(f) (vi) la séparation du capot de la deuxième chambre de vide du deuxième plateau, au fur et à mesure que le deuxième plateau continue de se déplacer,
(f) (vii) le retrait du deuxième produit emballé sous vide du deuxième plateau, au fur et à mesure que le deuxième plateau continue de se déplacer.
